# EUROPEAN PATENT APPLICATION

(11) **EP 1 587 269 A2**
(43) Date of publication of application: **19.10.2005**
(21) Application number: 05252308.1
(22) Date of filing: 14.04.2005
(51) Int. Cl.: H04L 27/26

(54) **Communication apparatus**

(30) Priority: 14.04.2004 JP 2004119287
(71) Applicant: NTT DoCoMo, Inc., Tokyo 100-6150 (JP)
(72) Inventor: Asai, Takahiro, c/o NTT DoCoMo. Inc., Chiyoda-ku Tokyo 100-6150 (JP); Fujii, Hiromasa, c/o NTT DoCoMo. Inc., Chiyoda-ku Tokyo 100-6150 (JP); Tanaka, Tetsu, c/o NTT DoCoMo. Inc., Chiyoda-ku Tokyo 100-6150 (JP); Suda, Hirohito, c/o NTT DoCoMo. Inc., Chiyoda-ku Tokyo 100-6150 (JP)
(74) Representative: Maury, Richard Philip

(57) **Abstract**

A communication apparatus in a radio transmission system in which plural first communication apparatuses sends the same transmission signals and a second communication apparatus receives the transmission signals is disclosed. The communication apparatus functions as one of the plural first communication apparatuses, and the communication apparatus includes: a detection part for detecting a start or a stop of data transmission performed by a first communication apparatus that is different from the communication apparatus; and a guard interval length control part for controlling a guard interval length on the basis of a detection result of the detection part.

## Description

### BACKGROUND OF THE INVENTION

### 1. Field of the Invention

The present invention relates to a communication apparatus in a radio transmission system in which plural communication apparatuses sends the same OFDM signals to a receiving apparatus.

### 2. Description of the Related Art

In mobile communications, the OFDM (Orthogonal Frequency Division Multiplexing) transmission method is being studied as a technology for decreasing characteristics deterioration due to effects of delay waves. Since the OFDM transmission method uses multiple sub-carriers to transmit data, a symbol length of each sub-carrier can be set long, so that characteristics deterioration due to effects of delay waves can be decreased.

In addition, by using a guard interval that is copied data of a part of an OFDM modulated signal and that is added to the data symbol, the characteristics deterioration due to effects of delay can be further decreased.

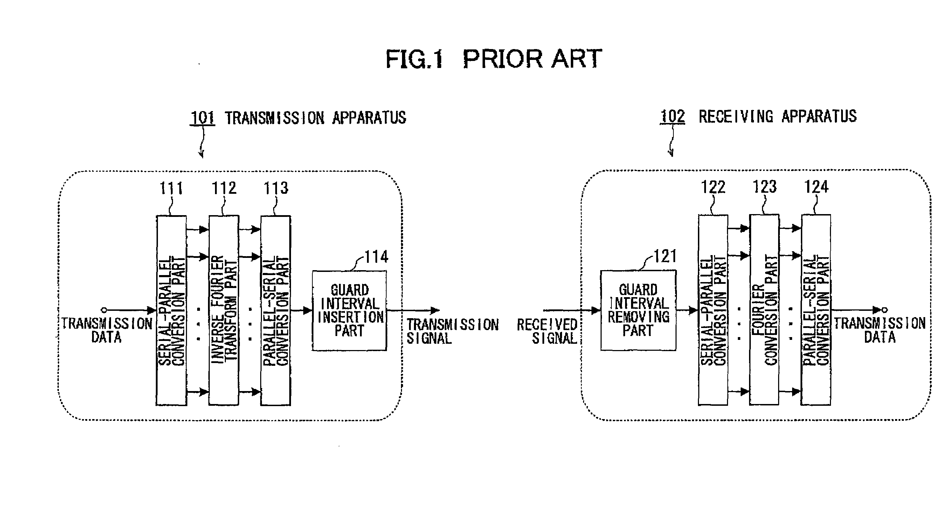

Fig.1 is a block diagram of a conventional transmission apparatus and a receiving apparatus that use OFDM.

As shown in the figure, in the transmission apparatus 101, a serial-parallel conversion part 111 converts modulated transmission data to pieces of parallel data the number of which pieces is the number of sub-carries. After that, an inverse Fourier transform part 112 performs inverse Fourier transform. Output signals from the inverse Fourier transform part 112 are input into a parallel-serial conversion part 113 and the signals are converted to serial data. A guard interval insertion part 114 inserts a guard interval in the data. After that, the signal is transmitted via a D/A (Digital to Analog) conversion part, a bandwidth limitation filter, a frequency conversion part, an amplifying part and the like.

A signal received by the receiving apparatus 102 is processed by an amplifying part, a bandwidth limiting filter, a frequency conversion part and the like, and the signal is converted into a digital signal by an A/D (Analog to Digital) conversion part. After that, as shown in the figure, a guard interval removing part 121 removes data in the guard interval from the signal. Then, a serial-parallel conversion part 122 converts the signal to pieces of parallel data the number of which pieces is the number of sub-carries. Then, a Fourier conversion part 123 performs Fourier conversion on the signals and the signals are converted to serial data by a parallel-serial conversion part 124. Then, the data are demodulated so that transmission data are reconstructed.

By the way, the above-mentioned OFDM method is used in digital terrestrial television broadcasting, and also, application of the OFDM method to mobile communications is being studied.

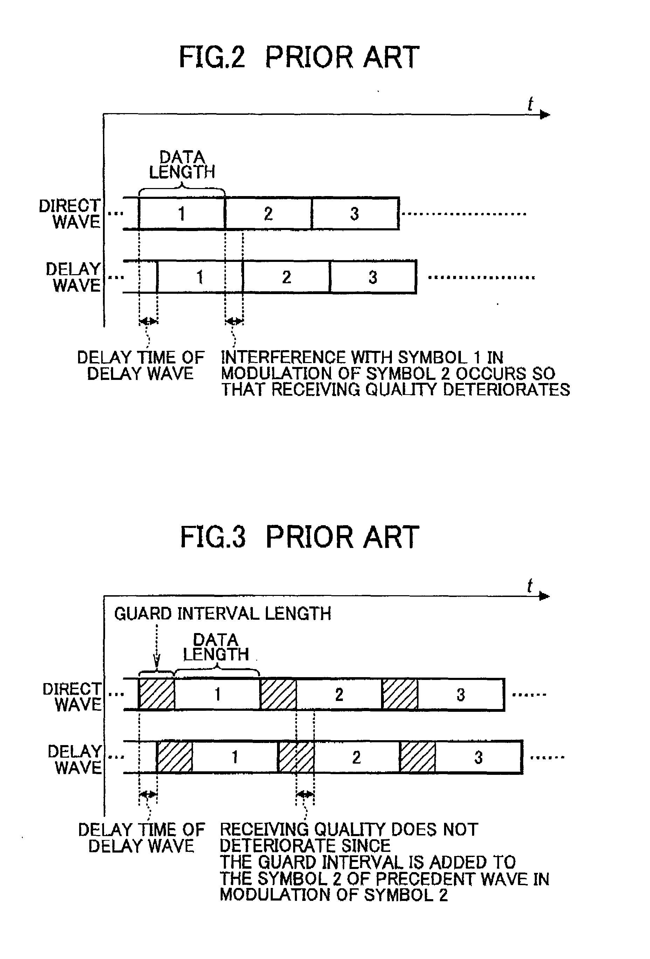

As mentioned above, the guard interval is used to decrease characteristics deterioration caused by delay waves in the OFDM method. In the following, effects by the guard interval are described with reference to Figs.2 and 3, wherein Fig.2 shows a received signal when the guard interval is not used, and Fig.3 shows a received signal when the guard interval is used.

In Figs.2 and 3, a received signal that arrives at a receiving apparatus includes a direct wave that arrives at the receiving apparatus first and a delay wave that arrives after a delay due to reflections by the ground, buildings and the like, wherein the direct wave and the delay wave are arranged in the direction of the vertical axis as shown in the figures. The horizontal axis shows time (t).

Fig.2 is described first. In the example shown in Fig.2, since the guard interval is not used, a second symbol is added to a first symbol, for example. Therefore, interference between the symbols occurs so that receiving quality is degraded. On the other hand, in the case of Fig.3 in which the guard interval is used, since the guard interval is used, the signal can be demodulated without interference between the symbol 1 and the symbol 2.

As shown in Fig.3, when delay time of the delay wave is equal to or less than the length of the guard interval, the signal can be demodulated without degradation of receiving quality. Thus, by setting a long length for the guard interval, characteristics deterioration caused by a delay wave having a long delay can be decreased. But, transmission efficiency is lowered since redundancy increases.

Generally, delay time of the delay wave changes according to propagation scenario. Thus, by adaptively controlling the length of the guard interval according to the delay time, transmission efficiency can be improved. Thus, a method is proposed for controlling the guard interval length according to a maximum delay time in plural delay waves (refer to Japanese Laid-open Patent Application No.2003-374233, for example). In the method disclosed in the document, a receiving apparatus measures delay times of delay waves and feeds them back to a transmission apparatus, so that the transmission apparatus sets a guard interval length longer than the maximum delay time in the delay waves. Accordingly, transmission efficiency can be improved.

However, there are following two problems in the conventional technology. The first problem is described first.

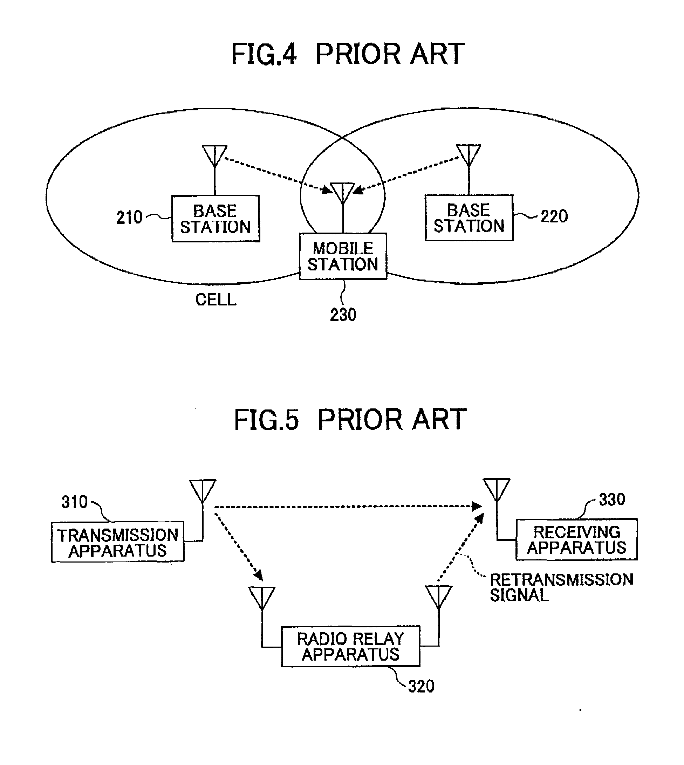

In the above conventional technology (document 1), the receiving apparatus measures delay profile, and feeds the delay profile back to the transmission apparatus so as to control the guard interval length according to the delay wave caused in the transmission route. In addition, for example, in a case where a same signal is received from more than one transmission apparatuses, the guard interval length can be controlled adaptively. Soft handover is an example in which the same signal is sent from plural transmission apparatus as shown in Fig.4. In the soft handover, when a mobile station 230 resides in a border of cells formed by a base station 210 and a base station 220 in a cellular mobile communication system, the mobile station 230 receives the same signals from the plural base stations 210 and 220.

Fig.5 shows an example in which a radio relay apparatus is used. The radio relay apparatus amplifies a signal received from a transmission apparatus 310, and resends the signal to a receiving apparatus 330.

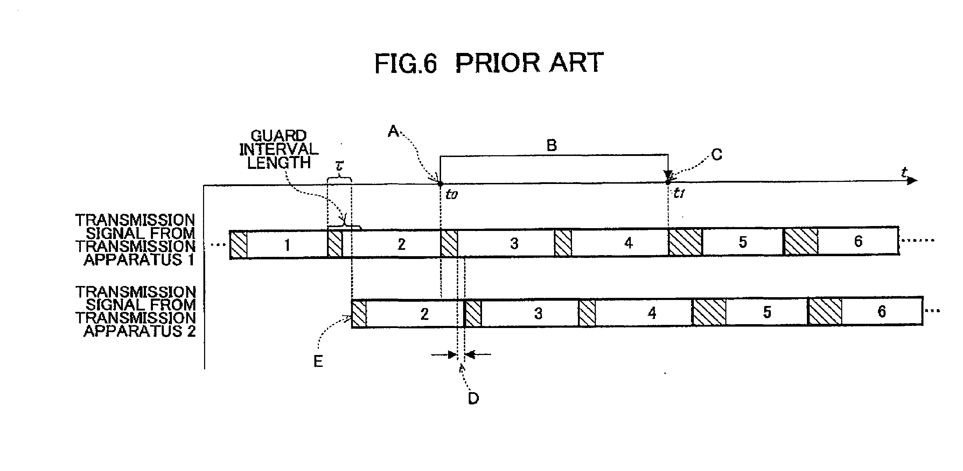

As to the above-mentioned example, signals sent from plural transmission apparatuses (transmission apparatus 310 and the radio relay apparatus 320, or plural base stations 210 and 220) are added, and the added signal is received by a receiving apparatus (receiving apparatus 330, or mobile station 230). Thus, in the conventional method, the transmission apparatus can control the guard interval length by receiving the measured delay profile without considering that there are plural transmission apparatuses. However, there is a case where the signal cannot be correctly demodulated in the receiving apparatus until the guard interval length is changed. In the following, this problem is described with reference to Fig.6.

Fig.6 shows received signals in a case where the conventional method is used when plural transmission apparatuses (transmission apparatus 1 and transmission apparatus 2 in this case) send the same signal to a receiving apparatus. As shown in the figure, the first symbol is sent from one transmission apparatus (transmission apparatus 1) to the receiving apparatus, and from the next symbol, the transmission apparatus 2 in addition to the transmission apparatus 1 sends the same transmission signal (shown as "E" in the figure). A transmission signal sent from the transmission apparatus 2 and received by the receiving apparatus is delayed by a delay time τ with respect to a transmission signal sent from the transmission apparatus 1. The delay time τ corresponds a process delay time caused when, for example, the distance between the transmission apparatus 2 and the receiving apparatus is greater than that between the transmission apparatus 1 and the receiving apparatus, or when there is a process delay for sending a signal in the transmission apparatus 2.

After the receiving apparatus receives a symbol 2 at a time to, the receiving apparatus measures the delay profile so as to recognize that a delay wave having a delay time τ longer than the guard interval length arrives. Then, the receiving apparatus sends, to the transmission apparatuses 1 and 2, a feedback signal for requesting the transmission apparatuses 1 and 2 to set a guard interval length longer than the delay time τ (shown as "A" in the figure). Each of the transmission apparatuses 1 and 2 sets the guard interval length longer based on the request from the receiving apparatus so as to send data.

That is, in the conventional method, a process delay occurs until the transmission apparatus gets feedback from the transmission apparatus, resets the guard interval length and sends a signal. In the example of Fig. 6, the transmission apparatus uses a longer guard interval from a symbol 5. For example, since the symbol 3 that is sent before resetting the guard interval length is added to a symbol 2 sent from the transmission apparatus 2, receiving quality deteriorate due to interference between symbols (shown as "D") in the figure.

On the other hand, as to symbols received after the symbol 5 that is received after the time t₁, since a guard interval length longer than a delay time τ is set, the signal can be demodulated without interference between symbols (shown as "C" in the figure).

As mentioned above, in the case where plural transmission apparatuses sends the same transmission signal, even though the above mentioned conventional technology is applied, there is a problem in that a symbol sent until the guard interval length is reset is affected by the interference between symbols so that receiving quality deteriorate(shown as "B" in the figure).

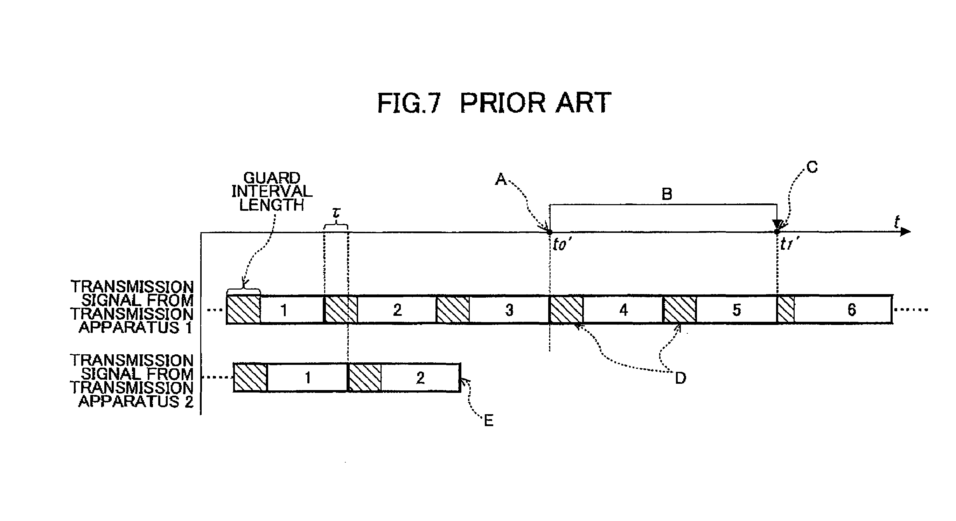

Next, a second problem is described with reference to Fig.7. Fig.7 shows a case where the number of transmission apparatuses changes from two to one after the symbol 2. The transmission apparatus 2 stops data transmission after sending the symbol 2 (shown as "E" in the figure). While data transmission is performed by the transmission apparatus 2, a guard interval length is set in consideration of a process delay τ of a transmission signal of the transmission apparatus 2 with respect to the transmission apparatus 1. After the receiving apparatus receives a symbol 3 at a time t₀', the receiving apparatus recognizes that a long delay wave corresponding to a transmission signal from the transmission apparatus 2 disappears as a result of measurement of the delay profile, then the receiving apparatus sends, to the transmission apparatus 1, a feedback request to set the guard interval length shorter (shown as "A" in the figure).

The transmission apparatus 1 receives the feedback signal sent from the receiving apparatus, and resets the guard interval length shorter to transmit data (shown as "C" in the figure). Thus, a process delay arises in the transmission apparatus 1 for receiving the feedback and changing the guard interval length (shown as "B" in the figure). In the example of the figure, the process delay is 2 symbols (shown as "B" in the figure). The transmission apparatus 1 uses the reset short guard interval length from a symbol 6, so that transmission efficiency improves from the symbol 6 (shown as "C").

Thus, in a case where signal transmission from the transmission apparatus 2 is stopped, although the transmission signal from the transmission apparatus 2 corresponding to a long delay wave does not exist in symbols 4 and 5, the guard interval is set long (shown as "D" in the figure). Thus, there is a problem in that redundancy increases so that transmission efficiency decreases.

In the same way, in a communication using the radio relay apparatus, since a process delay occurs until transmission is performed by the radio relay apparatus, the receiving apparatus receives a retransmitted signal from the radio relay apparatus with a larger delay time compared with a signal sent from the transmission apparatus that is directly received by the receiving apparatus.

Therefore, when retransmission of the signal from the radio relay apparatus starts, receiving quality of symbols transmitted until the guard interval length is reset largely deteriorates.

When transmission from the radio relay apparatus stops, since data transmission is performed by using more than necessary long guard interval until the guard interval length is reset, transmission efficiency decreases.

### SUMMARY OF THE INVENTION

An object of the present invention is to provide a communication apparatus to eliminate deterioration of receiving quality caused when plural transmission apparatuses send the same transmission signals, and to eliminate decrease of transmission efficiency caused when signal transmission from a transmission apparatus stops.

The object is achieved by a communication apparatus in a radio transmission system in which plural first communication apparatuses sends the same transmission signals and a second communication apparatus receives the transmission signals, wherein the communication apparatus functions as one of the plural first communication apparatuses, the communication apparatus including:
a detection part for detecting a start or a stop of data transmission performed by a first communication apparatus that is different from the communication apparatus; and
a guard interval length control part for controlling a guard interval length on the basis of a detection result by the detection part.

The communication apparatus may further includes:
a guard interval insertion part for inserting a guard interval controlled by the guard interval length control part into a transmission signal and sending the transmission signal at a time when the first communication apparatus starts to send a signal identical to the transmission signal.

According to the present invention, the communication apparatus can detects the start of data transmission by a first communication apparatus in the plural first communication apparatuses so that the guard interval length can be controlled according to the result of the detection. Thus, when another first transmission apparatus starts to send data, the second communication apparatus can receive the data without deteriorating modulation characteristics. In addition, since the guard interval length is controlled by detecting a stop of data transmission by a first communication apparatus, deterioration of transmission efficiency can be prevented. Thus, according to the present invention, deterioration of receiving characteristics and deterioration of transmission efficiency in the second apparatus can be prevented when plural first communication apparatus sends the same transmission signals.

### BRIEF DESCRIPTION OF THE DRAWINGS

Other objects, features and advantages of the present invention will become more apparent from the following detailed description when read in conjunction with the accompanying drawings, in which:
Fig.1 is a block diagram of conventional transmit and receive apparatuses that use OFDM;
Fig.2 shows a received signal including a direct wave and a delay wave when the guard interval is not used in conventional OFDM transmission;
Fig.3 shows a received signal including a direct wave and a delay wave when the guard interval is used in conventional OFDM transmission;
Fig.4 shows handover in a cellular system in which plural base stations send the same transmission signal;
Fig.5 shows communication via a radio relay apparatus in which plural transmission apparatuses send the same transmission signal;
Fig.6 shows receiving signals in a case where the conventional method is used when plural transmission apparatuses sends a signal to a receiving apparatus;
Fig.7 shows a case where the number of transmission apparatuses that sends a transmission signal change from two to one;
Fig.8 shows a configuration of a radio transmission system according to a first embodiment of the present invention;
Fig.9 is a block diagram showing configurations of a transmission apparatus and a receiving apparatus according to a first embodiment of the present invention;
Fig.10 is a sequence chart showing an operation (first example) according to the first embodiment of the present invention;
Fig.11 is a block diagram showing a configuration of the guard interval length control part in the transmission apparatus;
Fig.12 shows an example of a specified delay time management table managed in a memory;
Fig.13 is a block diagram showing a configuration of a communication process part of the transmission apparatus.
Fig.14 shows receiving signals in the first embodiment in which plural transmission apparatuses sends signals;
Fig. 15 is a sequence chart showing an operation (second example) according to the first embodiment of the present invention;
Fig.16 shows received signals according to the first embodiment of the present invention in the case where communications with two transmission apparatuses are changed to communications with one transmission apparatus;
Fig.17 is a block diagram showing a configuration of the radio relay apparatus according to a third embodiment of the present invention;
Fig.18 is a sequence chart showing an operation according to the third embodiment of the present invention;
Figs.19A and 19B show configuration examples of transmission frames in which the OFDM symbol length is constant when controlling the guard interval length according to the fourth embodiment of the present invention;
Figs.20A and 20B show configuration examples of transmission frames in which the data length is constant when controlling the guard interval length according to the fifth embodiment of the present invention;
Figs. 21A and 21B show configuration examples of transmission frames in which the ratio of the guard interval length to the data section length is constant in OFDM symbol when controlling the guard interval length according to the fifth embodiment of the present invention;
Fig.22 is a block diagram of a radio relay apparatus according to the seventh embodiment of the present invention;
Fig.23 shows a sequence chart showing an operation according to the seventh embodiment of the present invention;
Fig.24 is a block diagram of a receiving apparatus according to the eighth embodiment of the present invention;
Fig.25 shows a sequence chart showing an operation according to the eighth embodiment of the present invention;
Fig.26 is a block diagram of a receiving apparatus according to the ninth embodiment of the present invention;
Fig.27 shows a sequence chart showing an operation according to the ninth embodiment of the present invention;
Fig. 28 is a block diagram of a transmission apparatus according to the tenth embodiment of the present invention;
Fig.29 is a block diagram of a receiving apparatus according to the tenth embodiment of the present invention;
Fig.30 shows a sequence chart showing an operation according to the eleventh embodiment of the present invention.

### DETAILED DESCRIPTION OF THE PREFERRED EMBODIMENTS

In the following, embodiments of the present invention are described with reference to figures.

### (First embodiment)

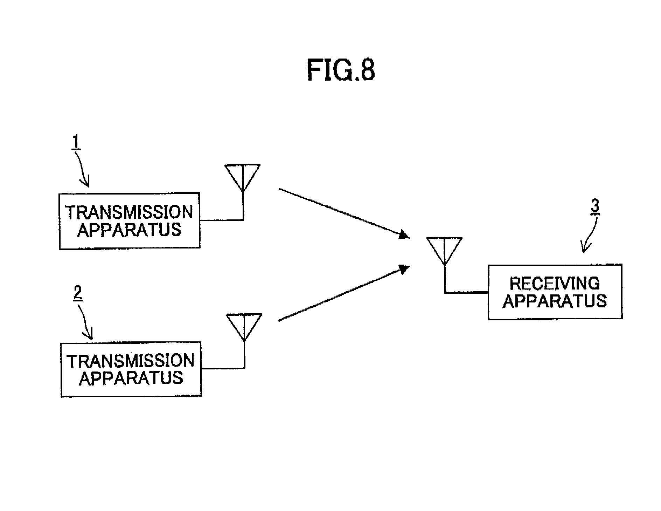

A radio transmission system of the first embodiment of the present invention is configured as shown in Fig.8, for example. As shown in the figure, the radio transmission system includes plural transmission apparatuses (transmission apparatus 1, transmission apparatus 2) and a receiving apparatus 3. In the radio transmission system of this embodiment, OFDM (Orthogonal Frequency Division Multiplexing) that is one of multi-carrier methods is used for signal transmission. From the transmission apparatus 1 and the transmission apparatus 2, the same transmission signals (OFDM signal) are sent to the receiving apparatus 3. In this embodiment, each of the transmission apparatuses 1 and 2 and the receiving apparatus 3 corresponds to a communication apparatus connected to a predetermined line for sending and receiving data.

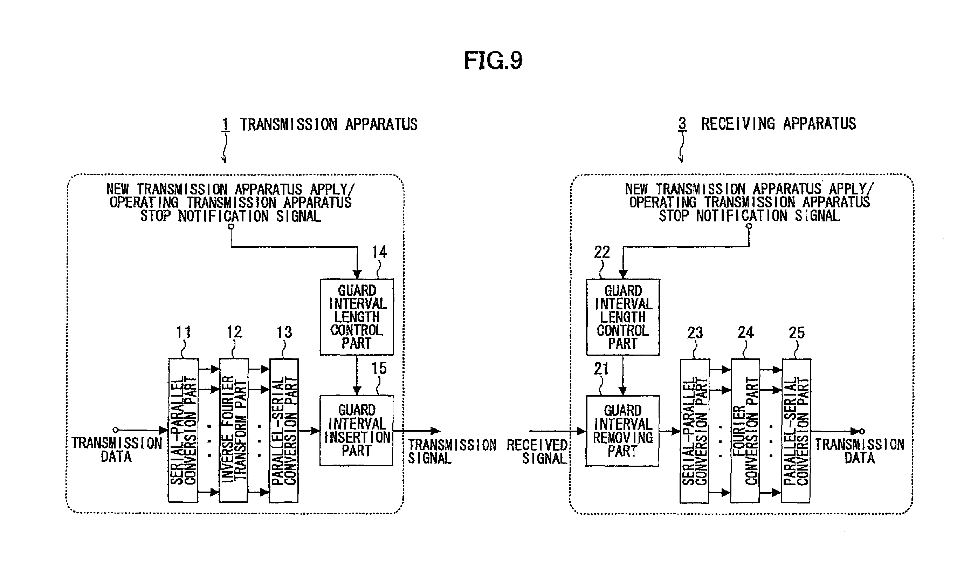

Fig.9 is a block diagram showing configurations of the transmission apparatus and the receiving apparatus. Since the transmission apparatus 1 and the transmission apparatus 2 have the same configuration, the transmission apparatus 1 is described as an example.

In the figure, the transmission apparatus 1 includes a serial-parallel conversion part 11, inverse Fourier conversion part 12, a parallel-serial conversion part 13, a guard interval length control part 14 and a guard interval inserting part 15.

The receiving apparatus 3 includes a guard interval removing part 21, a guard interval length control part 22, a serial-parallel conversion part 23, a Fourier conversion part 24 and a parallel-serial conversion part 25.

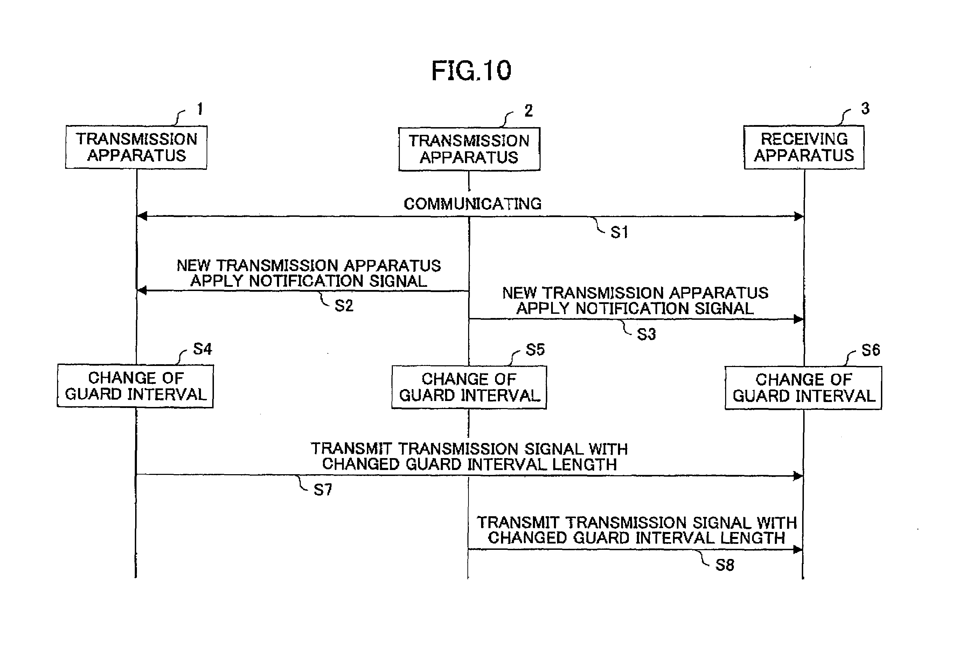

Next, operations of the transmission apparatus and the receiving apparatus configured as above-mentioned way are described with reference to a sequence chart of Fig.10. Assuming that the transmission apparatus 1 is communicating with the receiving apparatus 3 currently in step S1. In this situation, when the transmission apparatus 2 starts to send a transmission signal identical to the one sent by the transmission apparatus 1, the transmission apparatus 2 sends a transmission start signal (to be referred to as "new transmission apparatus apply notification signal") indicating start of data transmission by the transmission apparatus 2 to the transmission apparatus 1 and to the receiving apparatus 3 in steps S2 and S3.

The new transmission apparatus apply notification signal is transmitted via a cable line or a radio line between the transmission apparatus 2 and the transmission apparatus 1, and is transmitted via a radio line between the transmission apparatus 2 and the receiving apparatus 3. The notification method of the signal is described in detail later.

The guard interval length control part 14 receives the new transmission apparatus apply notification signal from the transmission apparatus 2 so as to detect that data transmission from the transmission apparatus 2 is started.

After the guard interval length control part 14 detects the start of data transmission from the transmission apparatus 2, the guard interval length control part 14 changes the guard interval length in step S4 in consideration of a predetermined delay time (to be referred to as specified delay time hereinafter). The specified delay time is caused when a distance between the transmission apparatus 2 and the receiving apparatus 3 is greater than that between the transmission apparatus 1 and the receiving apparatus 3, and caused by process delay that is required for transmission in the transmission apparatus 2. The specified delay time corresponds to a delay time caused when a transmission signal sent from the transmission apparatus 2 arrives at the receiving apparatus 3.

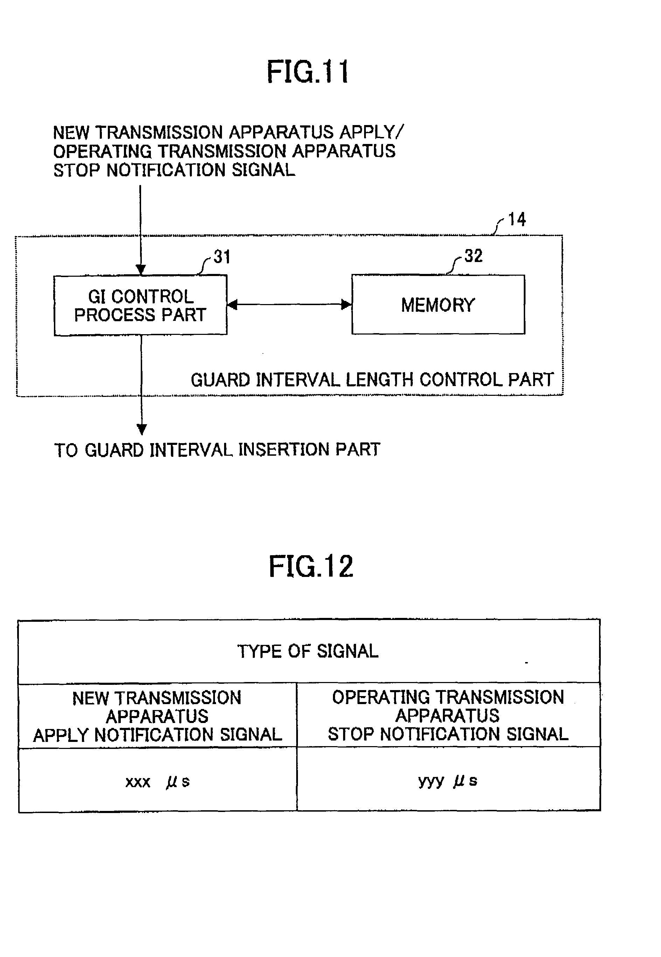

Next, operations of the guard interval length control part 14 of the transmission apparatus 1 are described. Fig.11 is a block diagram showing a configuration of the guard interval length control part 14.

In the figure, the guard interval length control part 14 includes a GI (guard interval) control process part 31 and a memory 32. The GI control process part 31 detects one of a new transmission apparatus apply notification signal and an operating transmission apparatus stop notification signal, reads specified delay time information stored in the memory 32 according to the detection result, and changes the guard interval length based on the specified delay time. As shown in the management table of Fig.12, the memory 32 stores the specified delay time information associated with the new transmission apparatus apply notification signal and the operating transmission apparatus stop notification signal. When the GI control process part 31 detects the new transmission apparatus apply notification signal, the specified delay time associated with the new transmission apparatus apply notification signal is read (assuming xxx *µ*s in this embodiment) so that the guard interval length is changed according to the specified delay time. The guard interval length control part 22 of the receiving apparatus 3 is similarly configured as the guard interval length control part of the transmission apparatus 1.

In the sequence of Fig.10, like the transmission apparatus 1, the guard interval length control part 22 of the receiving apparatus 3 receives the new transmission apparatus apply notification signal so that the guard interval length control part 22 detects start of data sending from the transmission apparatus 2, and sets the same guard interval length as that set in the transmission apparatus 1 in step S6.

Also in the transmission apparatus 2, a guard interval length identical to that in the transmission apparatus 1 is set. But, since the transmission apparatus 2 is the source of the new transmission apparatus apply notification signal, the transmission apparatus 2 does not receive the new transmission apparatus apply notification signal. In this case, the transmission apparatus 2 recognizes that the own apparatus is newly starting data transmission while sending the new transmission apparatus apply notification signal to the transmission apparatus 1 and the receiving apparatus 3, so that the transmission apparatus 2 may change the guard interval length according to the specified delay time information obtained based on the recognition in step S5.

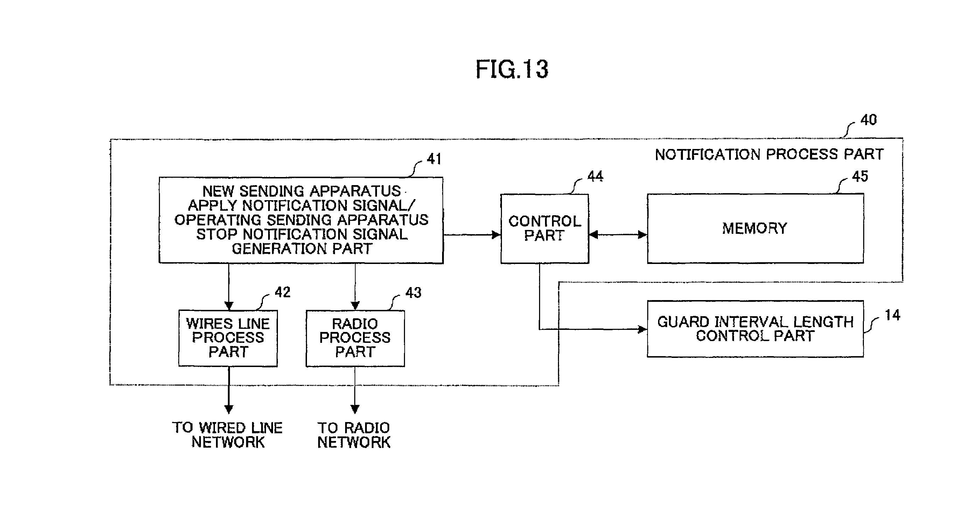

In the following, the method of changing the guard interval length in the transmission apparatus 2 is described with reference to Fig.13. Fig.13 is a block diagram showing the configuration of a notification process part 40 of the transmission apparatus.

A new transmission apparatus apply notification signal/operating transmission apparatus stop notification signal generation part 41 has a function for generating a new transmission apparatus apply notification signal and an operating transmission apparatus stop notification signal. These signals are supplied to a wire line process part 42 and a radio process part that is used for radio connection with the receiving apparatus 3 when the transmission apparatus 2 and the transmission apparatus 1 are connected via a wire line. When the transmission apparatus 2 and the transmission apparatus 1 are connected by radio, these signals are supplied to the radio process part 43. Then, the signal is converted to a wire signal or a radio signal so as to be transmitted to the transmission apparatus 1 or the receiving apparatus 3 via a wire network or a radio network.

A control part 44 detects that the new transmission apparatus apply notification signal/operating transmission apparatus stop notification signal generation part 41 generates the new transmission apparatus apply notification signal or the operating transmission apparatus stop notification signal. After that, the control part 44 accesses the memory 45 so as to read the specified delay time information associated with the detected notification signal, and output the information to the guard interval length control part 14 as the guard interval length information. The guard interval length control part 14 changes the guard interval length based on the information of the guard interval length received from the control part 44. The memory 45 stores information identical to that shown in Fig.12.

In the sequence of Fig.10, after the guard interval length is changed in each of the transmission apparatus 1, the transmission apparatus 2 and the receiving apparatus 3 in steps S4-S6, the guard interval inserting part in each of the transmission apparatus 1 and the transmission apparatus 2 inserts the changed guard interval in a signal so as to generate a transmission signal, and the transmission signal is sent to the receiving apparatus in steps S7 and S8.

In this embodiment, although as an preferred embodiment, the memory that stores the specified delay time is provided in each of the guard interval length control part 14 and the notification process part 40, a shared memory may be provided in one of the guard interval length control part 14 and the notification process part 40 such that both of the guard interval length control part 14 and the notification process part 40 can access the shared memory.

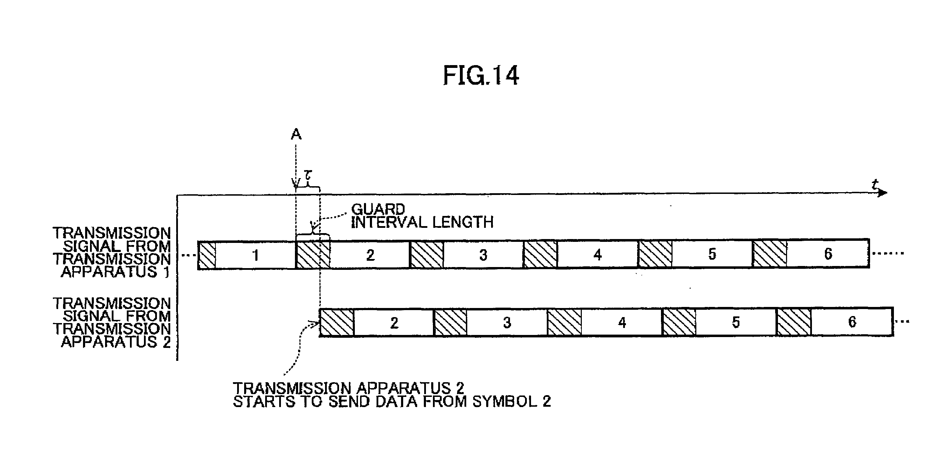

In the following, received signals in the case where the guard interval length is changed in each of the apparatuses are described with reference to Fig.14. Fig.14 shows received signals in the first embodiment in which plural transmission apparatuses (transmission apparatus 1 and transmission apparatus 2 in this embodiment) sends signals.

In the case shown in the figure, a symbol 1 is sent from one transmission apparatus (transmission apparatus 1) to the receiving apparatus 3. From the symbol 2, in addition to the transmission apparatus 1, the second transmission apparatus (transmission apparatus 2) starts to send a transmission signal identical to the one sent from the transmission apparatus 1. The transmission signal from the transmission apparatus 2 is received with a delay of delay time τ with respect to a transmission signal sent from the transmission apparatus 1. The delay time τ corresponds to the above-mentioned specified delay time. In this embodiment, before the transmission apparatus 2 starts to send data, the transmission apparatus 1 recognizes the start of data transmission from the transmission apparatus 2 by receiving the new transmission apparatus apply notification signal so as to change the guard interval length (to increase the guard interval length) (shown as "A" in the figure). Therefore, compared with the case shown in Fig.6 in which the conventional technology is used, the receiving apparatus receives the signal from the symbol 2 without interference between symbols, so that deterioration of receiving performance can be prevented.

As mentioned above, according to the present embodiment, when another transmission apparatus newly starts to send data, the new transmission apparatus apply notification signal is sent to each of the transmission apparatus and the receiving apparatus. Each of the transmission apparatus and the receiving apparatus controls the guard interval length based on the new transmission apparatus apply notification signal. Therefore, at the timing when another transmission apparatus newly starts to send data, the guard interval length of each of the transmission apparatus and the receiving apparatus can be controlled, so that the object of the present invention is achieved. That is, deterioration of received quality caused when the same transmission signals are sent from plural transmission apparatus can be prevented.

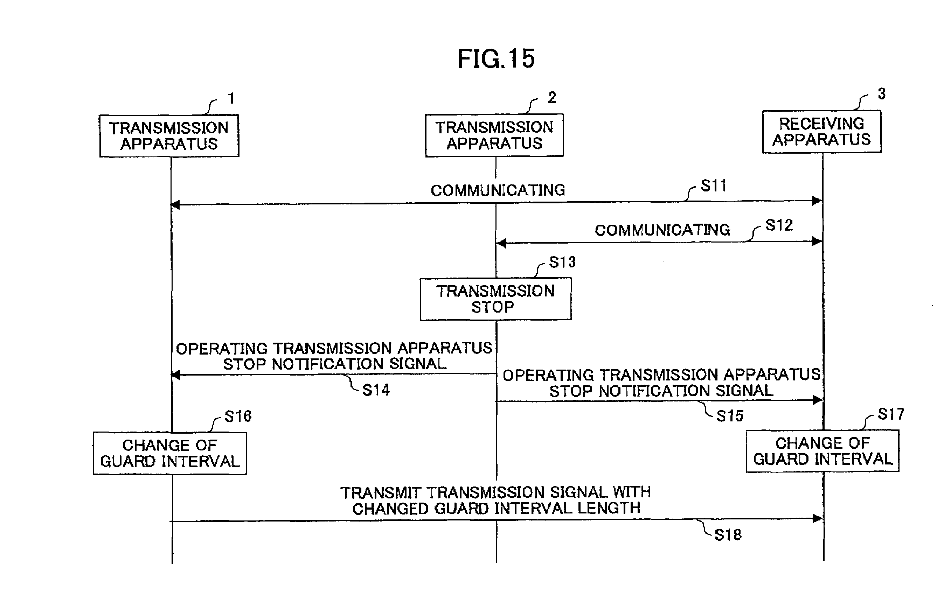

Next, operations of the transmission apparatuses and the receiving apparatus in a case where the number of transmission apparatuses that send signal changes from two to one are described with reference to a sequence chart of Fig.15. Assuming that the transmission apparatus 1 and the receiving apparatus 3 are communicating with each other in step S11, and the transmission apparatus 2 and the receiving apparatus 3 are communicating with each other in step S12. In this state, when the transmission apparatus 2 stops sending data in step S13, a transmission stop signal (to be refereed as operating transmission apparatus stop notification signal, hereinafter) that indicates that the transmission apparatus 2 stops sending data is sent to the transmission apparatus 1 and the receiving apparatus 3 in steps S14 and S15. The operating transmission apparatus stop notification signal is, similar to the above-mentioned new transmission apparatus apply notification signal, and is sent via a wired network or a radio network between the transmission apparatus 2 and the transmission apparatus 1, or via a radio network between the transmission apparatus 2 and the receiving apparatus 3.

Change of the guard interval length in the transmission apparatus 1 and the receiving apparatus 3 is performed by a procedure similar to the case of the above-mentioned new transmission apparatus apply notification signal. That is, each of the guard interval length control part 14 and 22 in the transmission apparatus 1 and the receiving apparatus 3 receives the operating transmission apparatus stop notification signal sent from the transmission apparatus 2, so as to recognize that the data transmission by the transmission apparatus 2 stops, and reads the specified delay time information associated with the operating transmission apparatus stop notification signal from the memory, and changes (resets) the guard interval length in steps S16 and S17.

After that, the guard interval insertion part 15 in the transmission apparatus 1 inserts the changed guard interval into a signal so as to generate a transmission signal that is sent to the receiving apparatus 3.

In this embodiment, since the data transmission is stopped in the transmission apparatus 2, the guard interval length is not changed in the transmission apparatus 2.

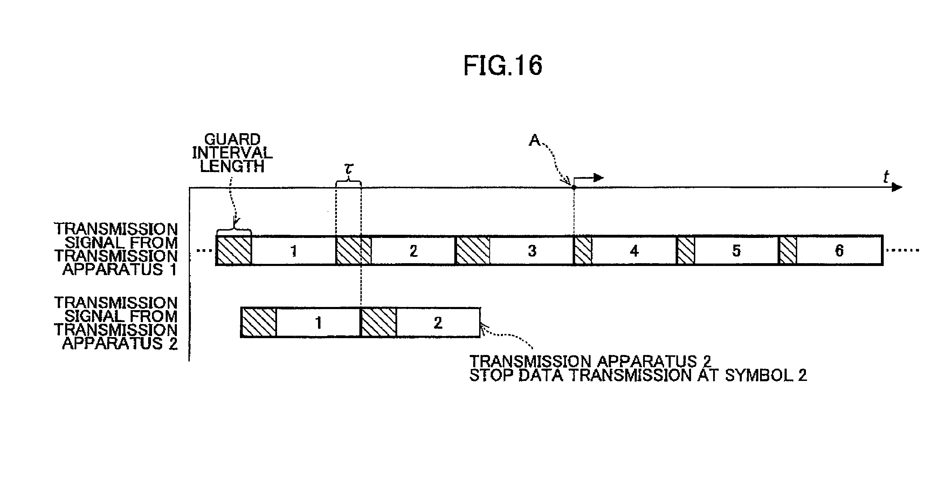

Next, receiving signals are described with reference to Fig.16 in the above-mentioned case where the guard interval length is changed in the transmission apparatus 1 and the receiving apparatus 3. Fig.16 shows received signals according to the first embodiment of the present invention in the case where the number of transmission apparatuses is changed from two to one. In this example, it is assumed that the transmission apparatus 2 stops data transmission after sending the symbol 2. While the transmission apparatus 2 is sending data, the guard interval length is set in consideration of delay time τ. After stopping the data transmission from the transmission apparatus 2, it is not necessary to consider transmission delay time between the transmission apparatus 2 and the receiving apparatus 3.

Since the transmission apparatus 1 recognizes that the transmission apparatus 2 stops data communication at the symbol 2 by receiving the operating transmission apparatus stop notification signal, the guard interval length control part 14 of the transmission apparatus 1 changes the guard interval length shorter after the symbol 4 (shown as "A"). After that, the guard interval insertion part 15 inserts the changed guard interval in a signal so as to generate a transmission signal to be transmitted.

As mentioned above, in the present embodiment, when a transmission apparatus stops data transmission, the operating transmission apparatus stop notification signal is sent to each transmission apparatus and the receiving apparatus. The guard interval length control part in each of the transmission apparatuses and the receiving apparatus controls the guard interval length based on the operating transmission apparatus stop notification signal. Accordingly, it becomes possible to control the guard interval length in each of the transmission apparatuses and the receiving apparatus at a timing when the transmission apparatus stops data transmission, so that deterioration of transmission efficiency can be prevented.

In the above-mentioned embodiment, the transmission apparatus 2 autonomously determines start/stop of data transmission so as to send the new transmission apparatus apply notification signal/operating transmission apparatus stop notification signal to the transmission apparatus 1 and the receiving apparatus 3 to change the guard interval length. However, the present invention is not limited to this embodiment, and can be modified within a scope of the present invention. In the following, modified examples are described.

### (Modified example 1)

The modified example 1 is an embodiment in which the receiving apparatus 3 determines the start of data transmission of the transmission apparatus 2. In this case, the receiving apparatus 3 determines the start of data transmission of the transmission apparatus 2 according to a received power of a signal sent from the transmission apparatuses, and sends a new transmission apparatus apply notification signal to the transmission apparatus 1 and the transmission apparatus 2.

### (Modified example 2)

The modified example 2 is an embodiment in which the transmission apparatus 1 determines the start of data transmission of the transmission apparatus 2. In this case, the transmission apparatus 1 receives, from the receiving apparatus 3, feedback of information of the received power, and determines the start of data transmission of the transmission apparatus 2, and sends the new transmission apparatus apply notification signal to the transmission apparatus 2 and the receiving apparatus 3.

The modified examples 1 and 2 can be similarly applied to embodiments for the operating transmission apparatus stop notification signal.

In addition, in the above-mentioned embodiments, each of the transmission apparatuses and the receiving apparatus changes the guard interval length based on the new transmission apparatus apply notification signal/operating transmission apparatus stop notification signal that indicates start/stop of data transmission. However, more preferably, it is desirable to include information of transmission timing in the new transmission apparatus apply notification signal/operating transmission apparatus stop notification signal. In the example of Fig.14, by using the information of the transmission timing, each of the transmission apparatus 1 and the receiving apparatus 3 can control the guard interval length at the transmission timing of the symbol 2 that is newly sent from the transmission apparatus 2. Thus, the guard interval length can be controlled more precisely such that interference between symbols does not occur. To include the information of the transmission timing is advantageous in the above-mentioned point.

### (Second embodiment)

In the following, the second embodiment is described in which plural transmission apparatuses (to be refereed to as base stations hereinafter) send the same transmission signals to a receiving apparatus (to be refereed to as mobile station hereinafter). In this embodiment, the present invention is applied to handover in cellular mobile communications shown in Fig.4.

In an handover region on an border of cells, the same transmission signals are sent to a mobile station form plural base stations. However, since distances between each base station and the mobile station are different, even if the base stations send signals at the same time, the mobile station receives the signals at different times.

In addition, when the base stations are not precisely synchronized with each other, the base stations send signals at different times so that the mobile station receives the signals from the base stations at different times. In such a case, if a difference between delay times of a transmission signal that arrives at the mobile station first and a transmission signal that arrives the mobile station last exceeds the guard interval, receiving quality deteriorates. Therefore, in the present embodiment, the guard interval length is controlled in consideration of the difference between delay times of the transmission signals transmitted from the base stations to the mobile station at the time of handover, and in consideration of differences of transmission timings of the base stations. Accordingly, deterioration of receiving quality can be prevented at the time of handover in a cellular system.

### (Third embodiment)

In the second embodiment, an embodiment is described in which the present invention is applied to handover in mobile communications in a cellular system. On the other hand, the present embodiment is an embodiment in which the present invention is applied to a radio relay system in which a radio relay apparatus relays a transmission signal from a transmission apparatus to a receiving apparatus. The radio relay system of this embodiment is similarly configured to the radio relay system shown in Fig.5 described as prior art. Therefore, reference numbers 310, 320 and 330 in Fig.5 are assigned to the transmission apparatus, the radio relay apparatus and the receiving apparatus respectively in this embodiment. In addition, the transmission apparatus and the receiving apparatus of this embodiment are similarly configured to those of the first embodiment.

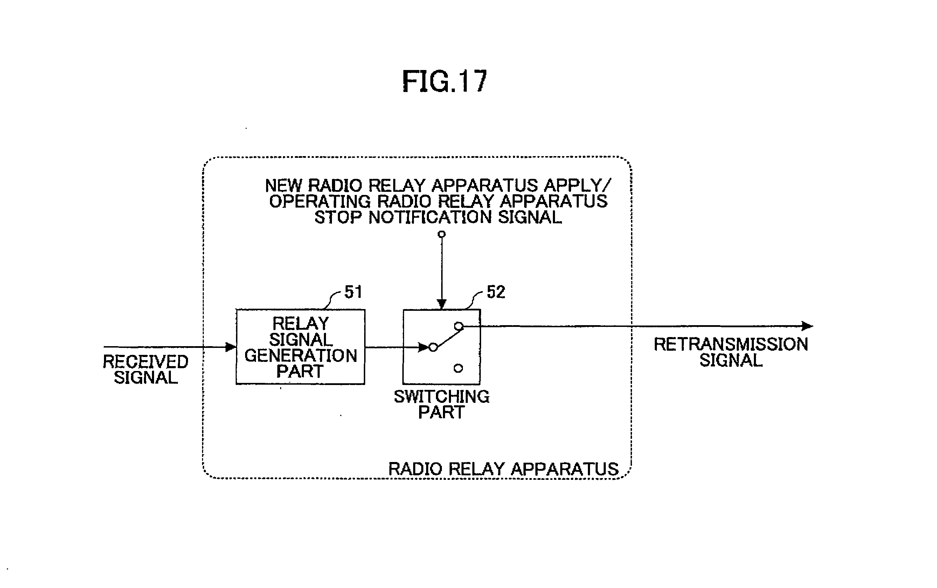

Fig.17 is a block diagram showing a configuration of the radio relay apparatus of the present embodiment.

As shown in Fig.17, the radio relay apparatus of the present embodiment includes a relay signal generation part 51 and a switching part 52. The relay signal generation part 51 generates a retransmission signal by using a received signal. The switching part 52 switches transmit/stop of the retransmission signal based on a signal (to be referred to as new radio relay apparatus apply notification signal hereinafter) indicating start of transmission of the retransmission signal from the radio relay apparatus or a signal (to be refereed to as operating radio relay apparatus stop notification signal hereinafter) indicating stop of transmission of the retransmission signal from the radio relay apparatus. The new radio relay apparatus apply notification signal is used as the new transmission apparatus apply notification signal in Fig.9, and the operating radio relay apparatus stop notification signal is used as the operating transmission apparatus stop notification signal in Fig.9.

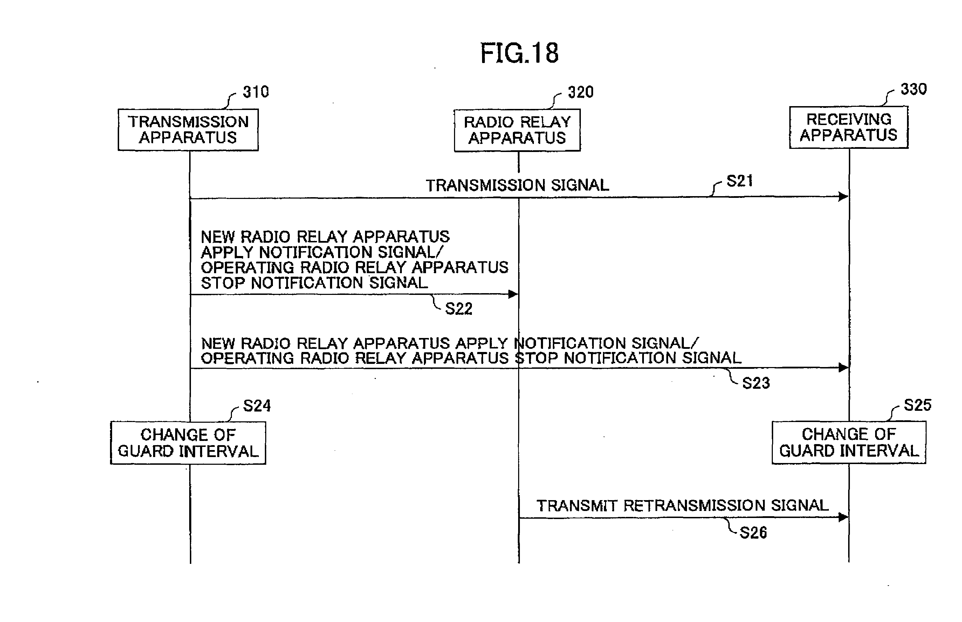

Next, the operation of the above-mentioned radio relay system is described with reference to a sequence chart in Fig.18. In the figure, assuming that the transmission apparatus 310 is sending a transmission signal to the receiving apparatus 330 in step S21, and that data transmission from the radio relay apparatus 320 is not performed. In this situation, the transmission apparatus 310 sends the new radio relay apparatus apply notification signal to the radio relay apparatus 320 and to the receiving apparatus 330 in steps S22 and S23, wherein the new radio relay apparatus apply notification signal is a signal for causing the radio relay apparatus 320 to start relaying a transmission signal. At this time, since the transmission apparatus 310 is a source of the new radio relay apparatus apply notification signal, the transmission apparatus 310 does not receive the new radio relay apparatus apply notification signal. Therefore, change of the guard interval length in the transmission apparatus 310 is performed in the same way as the first embodiment. That is, when the transmission apparatus 310 sends the new radio relay apparatus apply notification signal to the radio relay apparatus 320 and to the receiving apparatus 330, the transmission apparatus 310 reads information of the specified delay time from a memory that stores the information, and changes the guard interval length according to the specified delay time in step S24. In the following, the specified delay time is described. In the radio relay apparatus 320, there is a process delay for generating the retransmission signal by using the received signal in the relay signal generation part 51. In this embodiment, this process delay time is determined as the specified delay time, so that the transmission apparatus 310 controls the guard interval so as to change the length longer in consideration of the process delay in the radio relay apparatus 320.

Also, in the same way, the receiving apparatus 330 detects that relay of data starts in the radio relay apparatus 320 when the receiving apparatus 330 receives the new radio relay apparatus apply notification signal, and sets the guard interval length identical to the in the transmission apparatus 310 based on the detection result in step S25.

On the other hand, in the radio relay apparatus 320, the switch is changed to a contact point for sending the retransmission signal in the switching part so that transmission of the retransmission signal starts in step S26.

The above-mentioned embodiment describes a case where a retransmission signal from the radio relay apparatus 320 is not sent to the receiving apparatus 330. In the case where the retransmission signal from the radio relay apparatus 320 is being sent to the receiving apparatus 330, the transmission apparatus 310 sends the operating radio relay apparatus stop notification signal to the radio relay apparatus 320 and to the receiving apparatus 330.

In each of the transmission apparatus 310 and the receiving apparatus 330, the guard interval length is changed in the same way as mentioned above based on the operating radio relay apparatus stop notification signal. The radio relay apparatus 320 stops sending the retransmission signal after receiving the operating radio relay apparatus stop notification signal.

In this embodiment, since the radio relay apparatus 320 stops data transmission at some point, it is not necessary to consider process delay in the radio relay apparatus 320 after the data transmission stops. Therefore, the guard interval length control part in each of the transmission apparatus 310 and the receiving apparatus 330 sets the guard interval length shorter.

### (Fourth embodiment)

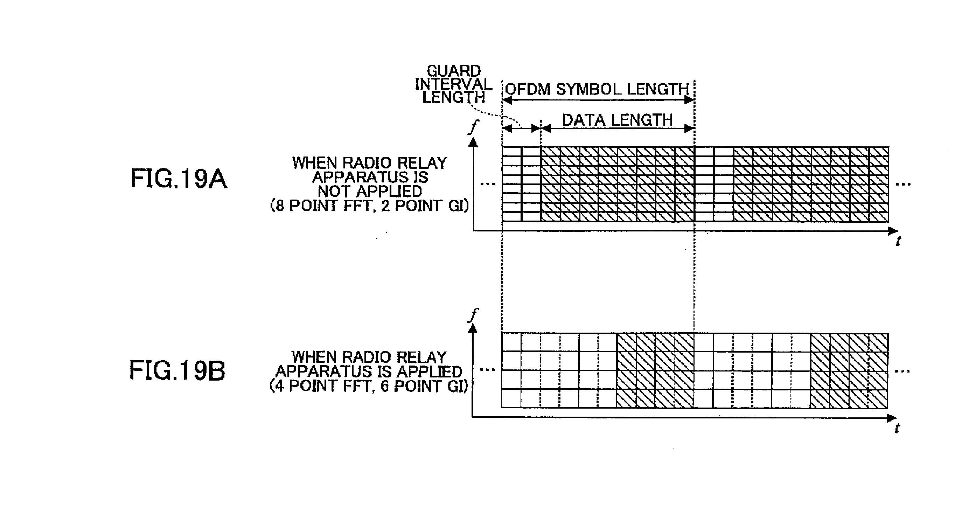

Next, an embodiment is described with reference to Figs.19A and 19B for a case where the guard interval length is adaptively controlled according to a process delay time required for retransmission of the radio relay apparatus in which an OFDM symbol length formed by a guard interval section and a data section is constant. Fig.19A shows a configuration of a transmission frame at the time when the radio relay apparatus is not applied (that is, when data transmission from the radio relay apparatus is not performed). Fig.19B shows a configuration of a transmission frame at the time when the radio relay apparatus is applied. In the figures, the vertical axis indicates frequency f, and the horizontal axis indicates time t.

In Fig.19A, when the radio relay apparatus is not applied, assuming that the transmission frame is configured with two point guard intervals in which OFDM modulation is performed with 8 point FFT for converting between time region and frequency region of a signal. In this situation, a case where the guard interval length is changed based on the new radio relay apparatus apply notification signal is described in the following. The process delay of the radio relay apparatus is stored beforehand in each of the transmission apparatus and the receiving apparatus (for example, memory shown in Figs.11 and 13). If the process delay corresponds to four points, the guard interval length is increased by four points from the two points so as to obtain 6 points in this embodiment.

As mentioned above, the guard interval length is set longer. On the other hand, the data length is changed shorter for keeping the OFDM symbol length constant, so that OFDM modulation is performed with 4 point FFT. By performing such operations, the guard interval length can be changed longer while keeping the OFDM symbol length constant. As a result, the receiving apparatus can receive a signal directly sent from the transmission apparatus and a retransmission signal sent from the radio relay apparatus without exceeding a guard interval length, so that modulation quality does not deteriorate.

### (Fifth embodiment)

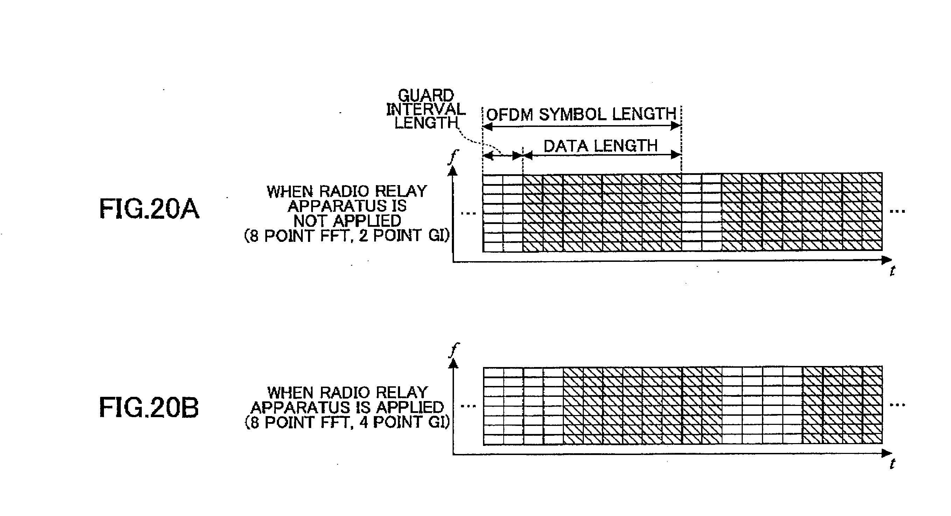

Next, an embodiment is described with reference to Figs. 20A and 20B for adaptively controlling the guard interval length according to process delay time required for retransmission of the radio relay apparatus while keeping the data length constant. Fig.20A shows a configuration of a transmission frame at the time when the radio relay apparatus is not applied. Fig.20B shows a configuration of a transmission frame at the time when the radio relay apparatus is applied. In the figures, the vertical axis indicates frequency f, and the horizontal axis indicates time t.

In Fig.20A, when the radio relay apparatus is not applied, assuming that the transmission frame is configured with two point guard intervals in which OFDM modulation is performed with 8 point FFT. In this situation, a case where the guard interval length is changed based on the new radio relay apparatus apply notification signal is described in the following.

The process delay of the radio relay apparatus is stored beforehand in each of the transmission apparatus and the receiving apparatus (for example, memory shown in Figs.11 and 13) , If the process delay corresponds to two points, the guard interval length is increased by two points from the two points so as to obtain four points in this embodiment.

In this embodiment, the data length is kept constant. Therefore, by performing the above-mentioned operation, OFDM modulation can be performed without changing the number of points of FFT. That is, according to the present embodiment, the guard interval length can be changed longer while keeping the data length constant. As a result, the receiving apparatus can receive a signal directly sent from the transmission apparatus and a retransmission signal sent from the radio relay apparatus without exceeding a guard interval length, so that modulation quality does not deteriorate.

### (Sixth embodiment)

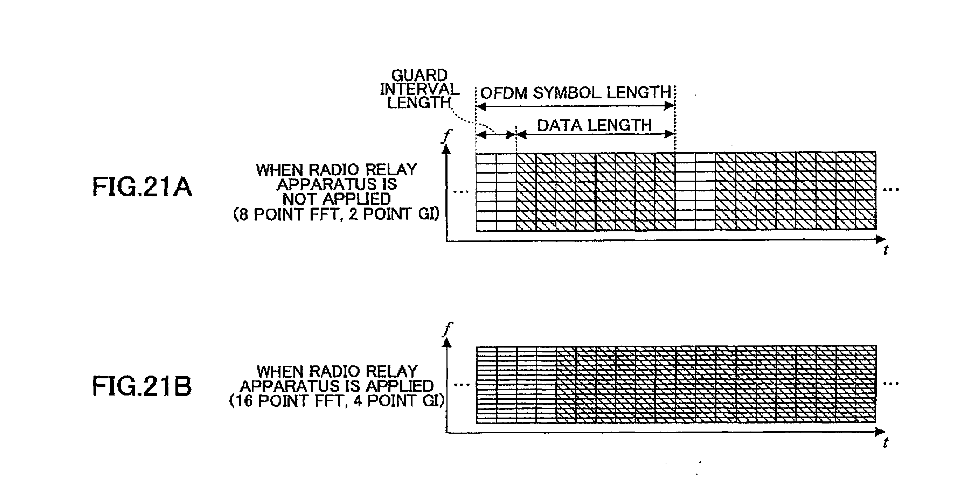

Next, an embodiment is described with reference to Figs.21A and 21B for adaptively controlling the guard interval length according to process delay time required for retransmission of the radio relay apparatus while keeping a ratio of the guard interval length to data section length constant. Fig. 21A shows a configuration of a transmission frame at the time when the radio relay apparatus is not applied. Fig.21B shows a configuration of a transmission frame at the time when the radio relay apparatus is applied. In the figures, the vertical axis indicates frequency f, and the horizontal axis indicates time t.

In Fig.21A, when the radio relay apparatus is not applied, assuming that the transmission frame is configured with two point guard intervals in which OFDM modulation is performed with 8 point FFT. In this situation, a case where the guard interval length is changed based on the new radio relay apparatus apply notification signal is described in the following.

The process delay of the radio relay apparatus is stored beforehand in each of the transmission apparatus and the receiving apparatus (for example, memory shown in Figs.11 and 13). If the process delay corresponds to two points, the guard interval length is increased by two points from the two points so as to obtain four points in this embodiment.

In this embodiment, the number of points of FFT is changed from 8 to 16 for keeping a ratio of the guard interval length to the data section length to be constant. Therefore, while keeping the ratio of the guard interval length to the data section length constant, the guard interval length can be changed longer. Therefore, the guard interval length can be changed longer without deteriorating transmission efficiency.

Therefore, according to this embodiment, the receiving apparatus can receive a signal directly sent from the transmission apparatus and a retransmission signal sent from the radio relay apparatus without exceeding a guard interval length, so that modulation quality does not deteriorate.

### (Seventh embodiment)

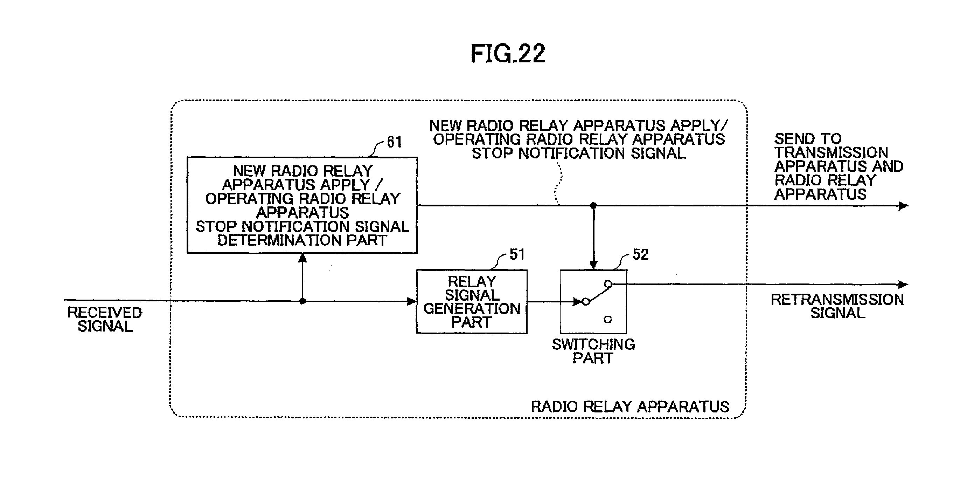

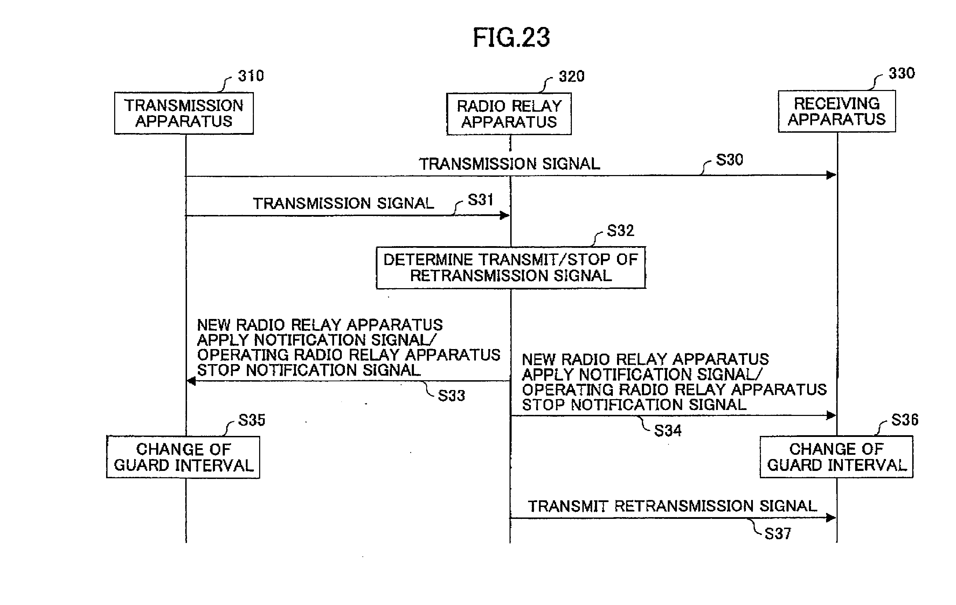

Next, an embodiment is described with reference to Figs.22 and 23 in a case where the radio relay apparatus determines transmission/stop of the retransmission signal from the radio relay apparatus by using a received signal, and sends the determination result to the transmission apparatus and the receiving apparatus. Fig.22 is a block diagram of the radio relay apparatus in this embodiment. Fig.23 shows a sequence chart showing the operation of this embodiment.

As shown in Fig.22, compared with the radio relay apparatus shown in Fig.17, the radio relay apparatus additionally includes a determination part 61 for determining new radio relay apparatus apply/operating radio relay apparatus stop. Therefore, only differences from the radio relay apparatus are described in detail. In Figs.22 and 17, same reference numerals are assigned to identify corresponding features.

In the following, the operation of this embodiment is described with reference to Fig.23. Assuming that a transmission signal is being sent from the transmission apparatus 310 to the receiving apparatus 330 in step S30, and that transmission from the radio relay apparatus 320 is not performed.

In this situation, when the radio relay apparatus 320 receives a transmission signal sent from the transmission apparatus 310 in step S31, the determination part 61 of the radio relay apparatus 320 determines transmission/stop of the retransmission signal from the radio relay apparatus 320 in step S32 by using the received signal. More specifically, the determination part 61 obtains a received signal quality (result of Cyclic Redundancy Check :CRC or C/N characteristics) and a delay time and the like so as to determine transmission/stop of the retransmission signal from the radio relay apparatus 320.

In this embodiment, since the retransmission signal is not being sent from the radio relay apparatus 320, it is determined whether to start transmission of the retransmission signal in step S32. When the radio relay apparatus 320 determines to start to transmit the retransmission signal in step S32, the radio relay apparatus 320 sends the new radio relay apparatus apply notification signal to the transmission apparatus 310 and the receiving apparatus 330 via a wired line or by radio in steps S33 and S34.

The radio relay apparatus 320 changes the switch to a contact point for transmitting the retransmission signal by the switching part so as to start transmission of the retransmission signal in step S37.

In the above-mentioned embodiment, the radio relay apparatus itself determines the start of transmission of the retransmission signal, and sends the new radio relay apparatus apply notification signal indicating the determination result to the transmission apparatus and the receiving apparatus. In a state where the radio relay apparatus is sending the retransmission signal to the receiving apparatus, the radio relay apparatus determines stop of transmission of the retransmission signal by using the received signal received from the transmission apparatus in step S32. Then, the radio relay apparatus sends the operating radio relay apparatus stop notification signal indicating the determination result in steps S33 and s34. After that, in each of the transmission apparatus and the receiving apparatus, the guard interval length is changed in the same way as when receiving the new radio relay apparatus apply notification signal. After the radio relay apparatus determines the stop of transmission in step S32, the radio relay apparatus stops transmission of the retransmission signal. By the way, the notification of the new radio relay apparatus apply notification signal/operating radio relay apparatus stop notification signal is performed via a wired line or a radio line.

As mentioned above, according to the present embodiment, the radio relay apparatus itself determines start/stop of the retransmission signal by using the transmission signal sent from the transmission apparatus, and sends the new radio relay apparatus apply notification signal/operating radio relay apparatus stop notification signal to the transmission apparatus and the receiving apparatus to let them change the guard interval length. Accordingly, the guard interval length can be controlled according to a state of a relay signal (for example, quality and delay time of the relay signal).

### (Eighth embodiment)

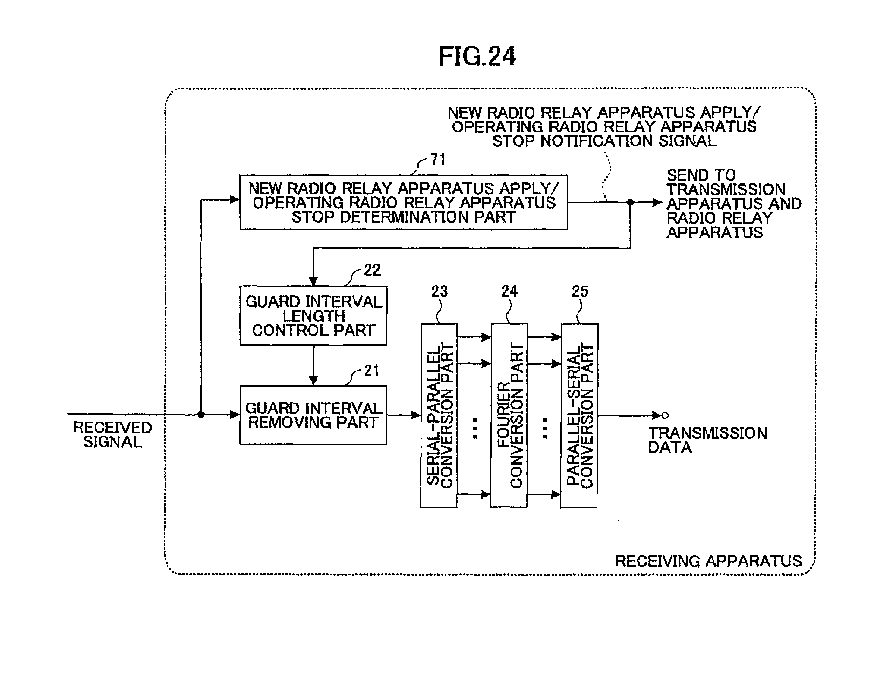

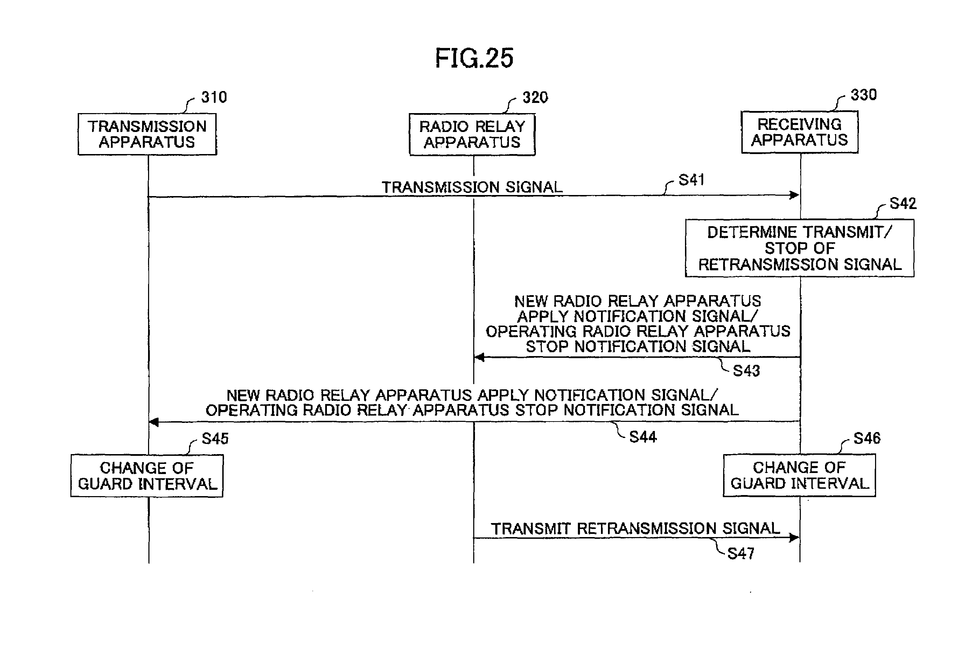

In the seventh embodiment, the radio relay apparatus determines transmission/stop of the retransmission signal by using the received signal. On the other hand, in the present embodiment, the receiving apparatus determines transmission/stop of the retransmission signal of the radio relay apparatus by using a received signal, and sends the determination result to the transmission apparatus and the radio relay apparatus. In the following, the present embodiment is described with reference to Figs.24 and 25. Fig.24 is a block diagram showing a configuration of the receiving apparatus. Fig.25 is a sequence chart showing the operation of this embodiment.

As shown in Fig.24, compared with the receiving apparatus shown in Fig.9, the receiving apparatus additionally includes a determination part 71 for determining new radio relay apparatus apply/operating radio relay apparatus stop. Thus, only differences from the receiving apparatus shown in Fig.9 are described in detail. In Figs.24 and 9, same reference numerals are assigned to identify corresponding features.

In the following, the operation of this embodiment is described with reference to Fig. 25. Assuming that a transmission signal is being sent from the transmission apparatus 310 to the receiving apparatus 330, and that transmission from the radio relay apparatus 320 is not performed. In this situation, the receiving apparatus 330 receives a transmission signal sent from the transmission apparatus 310 in step S41, and the determination part 71 determines transmission/stop of the retransmission signal from the radio relay apparatus 320 by using the received signal in step S42. More specifically, the determination part 71 obtains a received signal quality (result of Cyclic Redundancy Check :CRC or C/N characteristics) and a delay time and the like so as to determine start/stop of the retransmission signal from the radio relay apparatus 320.

In this embodiment, since the retransmission signal is not sent from the radio relay apparatus 320, it is determined whether to start transmission of the retransmission signal in step S42. When the receiving apparatus 330 determines to start transmission of the retransmission signal in step 542, the receiving apparatus 330 sends the new radio relay apparatus apply notification signal to the transmission apparatus 310 and the radio relay apparatus 320 via a wired line or by radio in steps S43 and S44.

Each of the transmission apparatus 310 and the receiving apparatus 330 changes the guard interval length in consideration of the process delay time of the radio relay apparatus 320 based on the received new radio relay apparatus apply notification signal in steps S45 and S46.

Based on the new radio relay apparatus apply notification signal received from the receiving apparatus 330, the radio relay apparatus 320 changes the switch to a contact point for transmitting the retransmission signal by the switching part so as to start transmission of the retransmission signal in step S47.

In the above-mentioned embodiment, the receiving apparatus determines the start of transmission of the retransmission signal from the radio relay apparatus, and sends the new radio relay apparatus apply notification signal indicating the determination result to the transmission apparatus and the radio relay apparatus. In a state where the radio relay apparatus is sending the retransmission signal to the receiving apparatus, the receiving apparatus may determine stop of transmission of the retransmission signal by using the receiving signal received from the transmission apparatus in step S42. Then, the receiving apparatus sends the operating radio relay apparatus stop notification signal indicating the determination result to the radio relay apparatus and the transmission apparatus in steps S43 and s44. After that, in each of the transmission apparatus and the receiving apparatus, the guard interval length is changed in the same way as when receiving the new radio relay apparatus apply notification signal, and the radio relay apparatus stops transmission of the retransmission signal. By the way, the notification of the new radio relay apparatus apply notification signal/operating radio relay apparatus stop notification signal is performed via a wired line or a radio line.

As mentioned above, according to the present embodiment, the receiving apparatus itself determines transmission/stop of the retransmission signal by using the transmission signal sent from the transmission apparatus, and sends the new radio relay apparatus apply notification signal/operating radio relay apparatus stop notification signal to the transmission apparatus and the radio relay apparatus to change the guard interval length. Accordingly, transmission/stop of the retransmission signal in the radio relay apparatus is determined according to a state of a received signal (for example, quality and delay time of the received signal) that is not relayed by the radio relay apparatus. Thus, the guard interval length can be controlled according to the result.

### (Ninth embodiment)

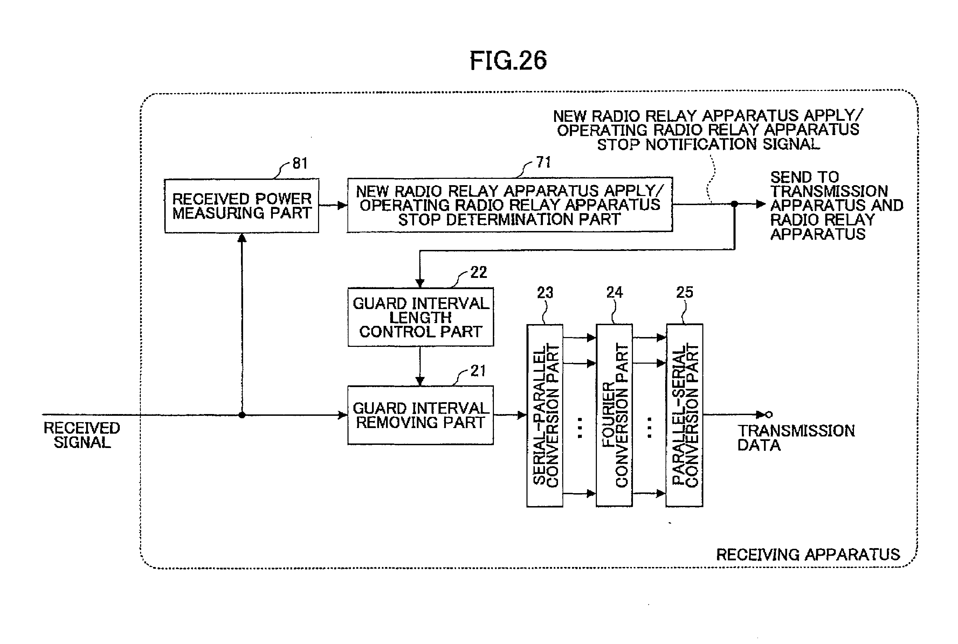

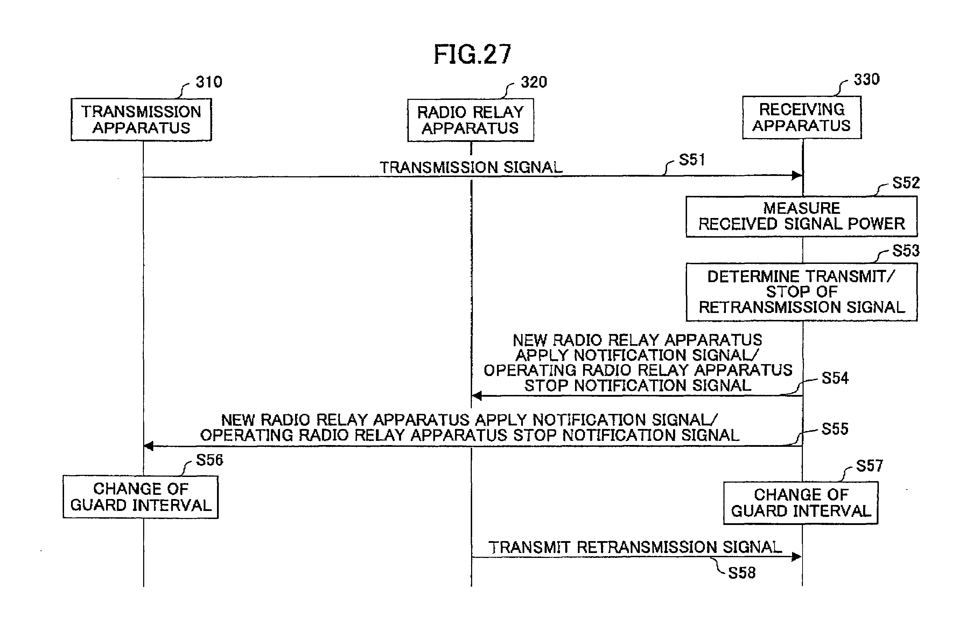

In the eighth embodiment, the receiving apparatus determines transmission/stop of the retransmission signal by using the received signal. On the other hand, in the present embodiment, the receiving apparatus determines transmission/stop of the retransmission signal of the radio relay apparatus by using a received power of the received signal, and sends the determination result to the transmission apparatus and the radio relay apparatus. In the following, the present embodiment is described with reference to Figs.26 and 27. Fig. 26 is a block diagram showing a configuration of the receiving apparatus. Fig.27 is a sequence chart showing the operation of this embodiment.

As shown in Fig.26, compared with the receiving apparatus shown in Fig.24 of the eighth embodiment, the receiving apparatus additionally includes a received power measuring part 81. Thus, only differences from the receiving apparatus shown in Fig.24 are described in detail. In Figs.24 and 26, same reference numerals are assigned to identify corresponding features.

In the following, the operation of this embodiment is described with reference to Fig.27. Assuming that a transmission signal is being sent from the transmission apparatus 310 to the receiving apparatus 330, and that transmission from the radio relay apparatus 320 is not performed.

In this situation, the receiving apparatus 330 receives a transmission signal sent from the transmission apparatus 310 in step S51, and the received power measuring part 81 measures the received signal power in step S52. Then, the measurement result of the received signal power is input to the determination part 71. The determination part 71 determines transmission/stop of the retransmission signal from the radio relay apparatus 320 based on the received signal power measured in the received power measuring part 81 in step S53. For example, when the received signal power is low, the determination part 71 determines to perform retransmission from the radio relay apparatus 320, and when the received power is high, the determination part 71 determines to stop the retransmission from the radio relay apparatus 320. In this embodiment, when the signal power is low so that it is determined to start transmission of the retransmission signal from the radio relay apparatus 320, and the receiving apparatus 330 sends the new radio relay apparatus apply notification signal to the transmission apparatus 310 and the radio relay apparatus 320 in steps S54 and S55. Here, since it is assumed that the retransmission signal is not being sent from the radio relay apparatus 320, the new radio relay apparatus apply notification signal is not sent if the signal power of the received signal is high and it is determined to stop the retransmission from the radio relay apparatus 320.

Each of the transmission apparatus 310 and the receiving apparatus 330 changes the guard interval length in consideration of the process delay time of the radio relay apparatus 320 based on the received new radio relay apparatus apply notification signal in steps S56 and S57.

Based on the new radio relay apparatus apply notification signal received from the receiving apparatus 330, the radio relay apparatus 320 changes the switch to a contact point for transmitting the retransmission signal by the switching part so as to start transmission of the retransmission signal in step S58.

In the above-mentioned embodiment, the receiving apparatus determines the start of transmission of the retransmission signal of the radio relay apparatus based on the received signal power, and sends the new radio relay apparatus apply notification signal indicating the determination result to the transmission apparatus and the radio relay apparatus. In a state where the radio relay apparatus is sending the retransmission signal to the receiving apparatus, the receiving apparatus may determine to stop transmission of the retransmission signal when the receiving apparatus determines that the received signal power of the received signal received from the transmission apparatus is high in step 553. Then, the receiving apparatus sends the operating radio relay apparatus stop notification signal indicating the determination result to the radio relay apparatus and the transmission apparatus in steps S54 and s55. After that, in each of the transmission apparatus and the receiving apparatus, the guard interval length is changed in the same way as when receiving the new radio relay apparatus apply notification signal, and the radio relay apparatus stops transmission of the retransmission signal. By the way, the notification of the new radio relay apparatus apply notification signal/operating radio relay apparatus stop notification signal is performed via a wired line or a radio line.

As mentioned above, according to the present embodiment, the guard interval length can be controlled according to the received power of the received signal that is not relayed by the radio relay apparatus.

### (Tenth embodiment)

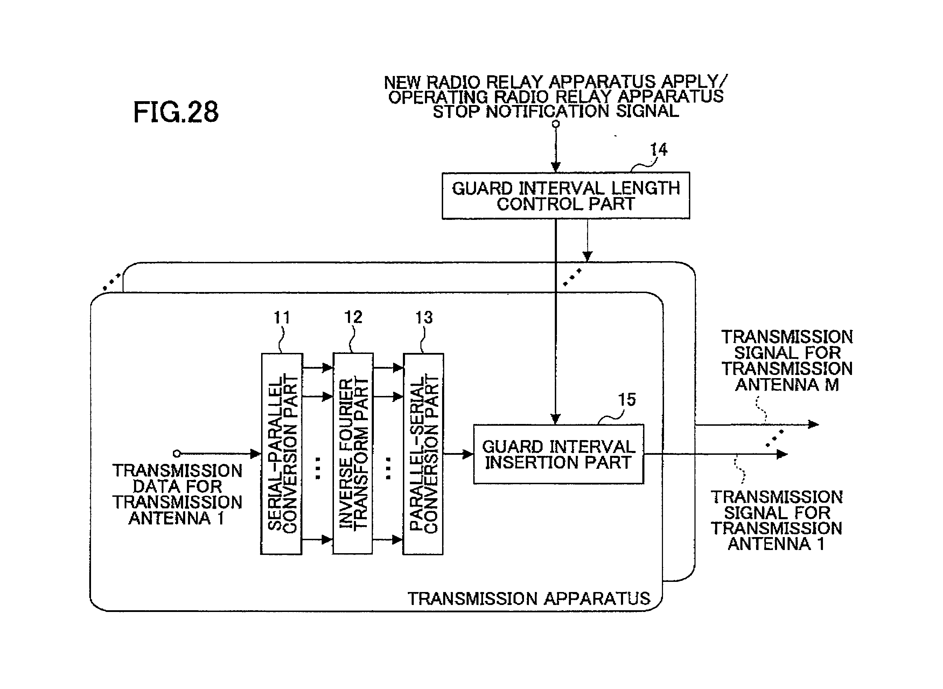

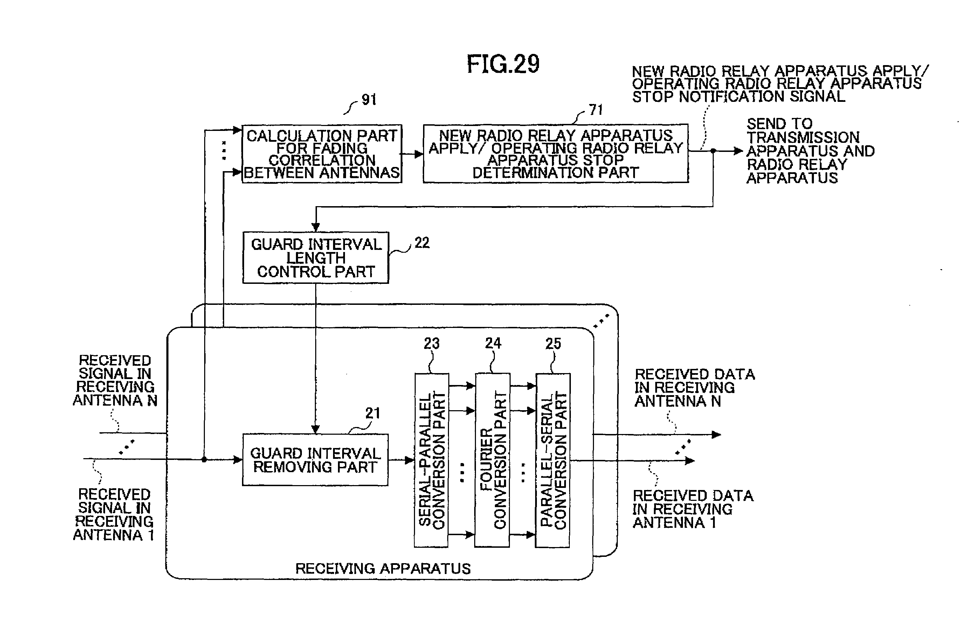

Next, a tenth embodiment is described with reference to Figs.28 and 29. In this embodiment, in a communication method using plural transmission antennas and receiving antennas, the receiving apparatus determines transmission/stop of the retransmission signal from the radio relay apparatus based on a fading correlation value of received signals.

Fig.28 is a figure showing a configuration of the transmission apparatuses that send transmission signals by using M transmission antennas. In this embodiment, an individual transmission apparatus is provided for each transmission antenna. In the following, a transmission apparatus for the transmission antenna 1 is described as an example. The basic configuration of the transmission apparatus of this embodiment is the same as that shown in Fig.9. Thus, in Figs.28 and 9, the same reference numerals are used to identify corresponding features.

Like the transmission apparatus shown in Fig.9, the guard interval length control part 14 of the transmission apparatus of this embodiment controls the guard interval length according to the process delay time in the radio relay apparatus based on the new radio relay apparatus apply/operating radio relay apparatus stop notification signal.

Fig.29 shows a configuration of a receiving apparatus that receives the transmission signal sent from the transmission apparatus by using N receiving antennas. Compared with the receiving apparatus shown in Fig.24, the receiving apparatus of this embodiment additionally includes a calculation part 91 for calculating a fading correlation between antennas. Therefore, only differences from the receiving apparatus shown in Fig.24 are described in detail. In Figs.24 and 29, same reference numerals are assigned to identify corresponding features.

In the figure, the calculation part 91 receives signals in each receiving antenna (receiving antennas 1-N), and calculates the fading correlation value between antennas. Generally, in a method for performing communication using plural transmission antennas and receiving antennas, transmission quality deteriorates when the fading correlation value between antennas is high. Thus, the determination part 71 determines apply of a new radio relay apparatus or stop of an operating radio relay apparatus based on the calculation result of the fading correlation value between antennas. For example, when the fading correlation value between antennas is high, it is determined to apply the new radio relay apparatus, and when the fading correlation value between antennas is low, it is determined to stop the operating radio relay apparatus.

After the receiving apparatus determines transmission or stop of the retransmission signal as mentioned above, the receiving apparatus sends the new radio relay apparatus apply/operating radio relay apparatus stop notification signal to the transmission apparatus and the radio relay apparatus. Each of the transmission apparatus and the receiving apparatus changes the guard interval length based on the process delay time of the radio relay apparatus according to the received new radio relay apparatus apply/operating radio relay apparatus stop notification signal.

The radio relay apparatus transmits or stops the retransmission signal according to the received new radio relay apparatus apply/operating radio relay apparatus stop notification signal. By the way, the new radio relay apparatus apply/operating radio relay apparatus stop notification signal is sent via a wired line or radio line.

As mentioned above, according to the present embodiment, the guard interval length can be controlled according to the fading correlation value between antennas.

### (Eleventh embodiment)

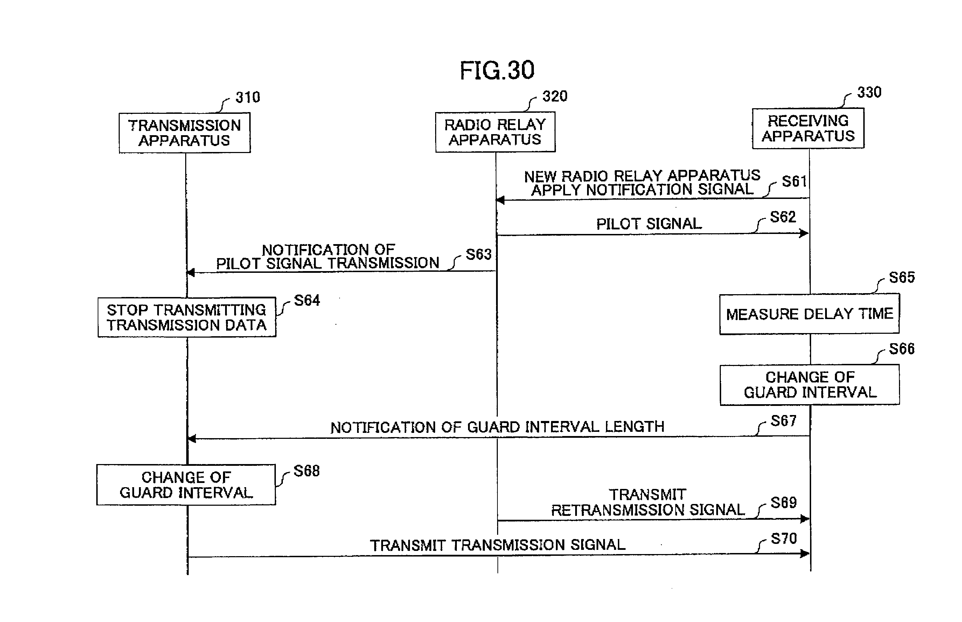

In the above-mentioned embodiment, the guard interval length is controlled based on the process delay time of the radio relay apparatus. However, the present invention is not limited to the embodiment. In the following, the eleventh embodiment is described with reference to Fig.30 in which the guard interval length is controlled according to a maximum delay time of a delay wave between the radio relay apparatus and the receiving apparatus in addition to the process delay time in the radio relay apparatus. Fig.30 is a sequence chart showing operation of the present embodiment.

As shown in the figure, when the radio relay apparatus 320 receives the new radio relay apparatus apply notification signal from the receiving apparatus 330 in step S61, the radio relay apparatus 320 sends a known signal (pilot signal) to the receiving apparatus 330 in step S62 before starting the transmission of the retransmission signal. In addition, the radio relay apparatus 320 notifies the transmission apparatus 310 that the pilot signal has been sent to the receiving apparatus 330 in step S63.

When the transmission apparatus 310 receives the notification of sending the pilot signal, the transmission apparatus 310 stops data transmission to the receiving apparatus 330 in step S64. That is, while the pilot signal is being received by the receiving apparatus 330, data transmission from the transmission apparatus is temporarily stopped.

The receiving apparatus measures the maximum delay time of delay waves by using the pilot signal sent from the radio relay apparatus 320 in step S65. Then, the guard interval length is changed in consideration of the measured maximum delay time and the process delay time in the radio relay apparatus 320 in step 566. For example, receiving apparatus 330 compares the maximum delay time with the process delay time, and changes the guard interval length based on a longer delay time. Or, the guard interval length may be changed based on a sum of the maximum delay time and the process delay time.

The guard interval length set in the above-mentioned way is sent to the transmission apparatus 310 from the receiving apparatus 330 in step S67. In the transmission apparatus 310, a guard interval length identical to the guard interval length set in the receiving apparatus 330 is set in step S68. After that, the radio relay apparatus 320 starts to transmit the retransmission signal in step S69, and transmission of transmission signals from the transmission apparatus 310, that was stopped, is started in step S70.

According the present embodiment, the guard interval length can be controlled in consideration of the delay time measured using the pilot signal. Thus, the receiving apparatus can receive transmission signals from the transmission apparatus and the radio relay apparatus without exceeding the guard interval, so that deterioration of the receiving quality can be prevented.

In addition, although the above-mentioned embodiment shows a case where one radio relay apparatus relays a transmission signal, the present invention is not limited to this embodiment. The present invention can be applied to a case in which the transmission signal is relayed by plural radio relay apparatuses. In this case, the receiving apparatus measures a maximum delay time of the delay waves between each radio relay apparatus and the receiving apparatus, and can control the guard interval length in consideration of the measured maximum delay time and the process delay time required for retransmission in the radio relay apparatus.

### (Twelfth embodiment)

Next, the twelfth embodiment is described. In the twelfth embodiment, the receiving apparatus compares a maximum delay time of delay waves of a received signal that is directly received without being relayed by the radio relay apparatus from the transmission apparatus with a sum of a maximum delay time of delay waves received via the radio relay apparatus from the transmission apparatus and a process delay time in the radio relay apparatus, and the receiving apparatus controls the guard interval length according to a longer time.

In this embodiment, after the receiving apparatus receives a new radio relay apparatus apply notification signal, the receiving apparatus compares a maximum delay time in delay waves of a received signal that is directly received without being relayed by the radio relay apparatus from the transmission apparatus with a sum of a maximum delay time of delay waves received via the radio relay apparatus from the transmission apparatus and a process delay time in the radio relay apparatus. In this embodiment, to measure the maximum delay time of delay waves received via the radio relay apparatus from the transmission apparatus, the method of the eleventh embodiment can be used.

Based on the result of the comparison, the receiving apparatus determines the guard interval length based on a longer time. The guard interval length determined in this way is sent from the receiving apparatus to the transmission apparatus, so that the transmission apparatus changes the guard interval length using the notified guard interval length so as to transmit data.

As mentioned above, according to the present embodiment, the guard interval length can be controlled in consideration of the obtained plural delay times.

### (Thirteenth embodiment)

In the above embodiment, it is assumed that the radio relay apparatus is fixed. In contrast, in the following, an embodiment in which the radio relay apparatus moves is described. In this embodiment, in the case where the radio relay apparatus moves, the guard interval length is set as a value that is obtained by adding a predetermined fixed value to a process delay time required for retransmission in the radio relay apparatus.

When the radio relay apparatus moves, the delay time of the delay wave of the retransmission signal from the radio relay apparatus varies according to time. Therefore, in this embodiment, when the radio relay apparatus moves, the receiving apparatus sets a value, as the guard interval length, obtained by adding a predetermined fixed value to the process delay time required for retransmission by the radio relay apparatus in consideration of the variation of the delay time of the delay wave of the retransmission signal.

As mentioned above, according to the present embodiment, when the radio relay apparatus moves, deterioration of receiving quality due to a long delay wave caused by time variation of the delay time of the retransmission signal of the radio relay apparatus can be prevented.

### (Fourteenth embodiment)

Next, the fourteenth embodiment is described. In this embodiment, when plural radio relay apparatuses send the retransmission signals, the receiving apparatus measures a maximum delay time of the delay wave among sections between each relay apparatus and the receiving apparatus, and adaptively controls the guard interval length according to the maximum delay time and the process delay time of retransmission of the radio relay apparatus.

When the retransmission signals are sent from plural radio relay apparatuses at the same time, since states of transmission routes between each radio relay apparatus and the receiving apparatus are different, the maximum delay times in the routes for delay waves caused by the retransmission signals are different. Thus, the receiving apparatus of the present embodiment obtains a maximum value of maximum delay times of the delay waves in the routes between each radio relay apparatus and the receiving apparatus, so as to determine the guard interval length according to the maximum value.

According to the present embodiment, since the receiving apparatus can receive retransmission signals from any of radio relay apparatuses without exceeding the guard interval length, signals can be received without deterioration of modulation characteristics.

The present invention is not limited to the specifically disclosed embodiments, and variations and modifications may be made without departing from the scope of the invention.

## Claims

1. A communication apparatus in a radio transmission system in which plural first communication apparatuses sends the same transmission signals and a second communication apparatus receives the transmission signals, wherein the communication apparatus functions as one of the plural first communication apparatuses, the communication apparatus **characterized by**:
a detection part for detecting a start or a stop of data transmission performed by a first communication apparatus that is different from the communication apparatus; and
a guard interval length control part for controlling a guard interval length on the basis of a detection result by the detection part.

2. The communication apparatus as claimed in claim 1, the communication apparatus further comprising:
a guard interval insertion part for inserting a guard interval controlled by the guard interval length control part into a transmission signal and sending the transmission signal at a time when the first communication apparatus starts to send a signal identical to the transmission signal.

3. The communication apparatus as claimed in claim 1, wherein the detection part detects the start or the stop of the data transmission by receiving a start signal indicating that the first communication apparatus starts data transmission or by receiving a stop signal indicating that the first communication apparatus stops data transmission.

4. The communication apparatus as claimed in claim 1, wherein the guard interval length control part controls the guard interval length such that a delay of a transmitted signal received by the second communication apparatus does not exceed the guard interval length.

5. The communication apparatus as claimed in claim 1, wherein the first communication apparatus that is different from the communication apparatus is a radio relay apparatus, and the guard interval length control part controls the guard interval length based on a process delay time in the radio relay apparatus.

6. The communication apparatus as claimed in claim 1, wherein the first communication apparatus that is different from the communication apparatus is a radio relay apparatus, and the guard interval length control part controls the guard interval length based on a process delay time in the radio relay apparatus on condition that a value relating to an OFDM symbol that includes a guard interval section and a data section is kept constant.

7. The communication apparatus as claimed in claim 3, wherein the second communication apparatus determines the start or the stop of data transmission by the first communication apparatus according to a received power or a fading correlation value of a received signal, and sends a result of the determination to the first communication apparatus as the start signal or the stop signal.

8. The communication apparatus as claimed in claim 5, wherein the guard interval length control part determines the guard interval length by comparing, with each other, states of propagation scenario between the second communication apparatus and each of the first communication apparatuses that function as radio relay apparatuses.

9. The communication apparatus as claimed in claim 1, wherein the first communication apparatus that is different from the communication apparatus is a radio relay apparatus, and the guard interval length control part controls the guard interval length based on a maximum delay time of a delay wave measured in the second communication apparatus by using a known signal and based on a process delay time in the radio relay apparatus.

10. The communication apparatus as claimed in claim 9, wherein the guard interval length control part compares a first maximum delay with a sum of a second maximum delay and the process delay time in the radio relay apparatus, and controls the guard interval length based on a result of the comparison, wherein the first maximum delay is a maximum delay time of a delay wave of a received signal received by the second apparatus without being relayed by the radio relay apparatus, and wherein the second maximum delay time is a maximum delay time of a delay wave of a received signal transmitted via the radio relay apparatus.

11. The communication apparatus as claimed in claim 1, wherein the first communication apparatus that is different from the communication apparatus is a radio relay apparatus, and,
when the radio relay apparatus moves, the guard interval length control part sets a sum of a process delay time in the radio relay apparatus and a predetermined fixed value as the guard interval length.

12. The communication apparatus as claimed in claim 1, wherein the plural first communication apparatuses except for the communication apparatus are radio relay apparatuses, and,
when the radio relay apparatuses sends transmission signals, the guard interval length control part controls the guard interval length based on a maximum delay time and a process delay time in the radio relay apparatus wherein the maximum delay time is a maximum value of delays of delay waves that are sent from each of the radio relay apparatuses and that are received by the second communication apparatus.

13. The communication apparatus as claimed in claim 7, wherein the second communication apparatus comprises a measuring part for measuring the received power, and the second communication apparatus determines the start or the stop of the data transmission based on the received power measured in the measuring part.

14. The communication apparatus as claimed in claim 7, wherein the second communication apparatus comprises a fading correlation value measuring part for measuring the fading correlation value of the received signal, and the second communication apparatus determines the start or the stop of the data transmission based on the fading correlation value measured by the fading correlation value measuring part.
